# EUROPEAN PATENT APPLICATION

(11) **EP 4 564 891 A1**
(43) Date of publication of application: **04.06.2025**
(21) Application number: 23845134.8
(22) Date of filing: 16.06.2023
(51) Int. Cl.: H04W 24/08, H04W 72/04

(54) **WIRELESS RESOURCE CONFIGURATION METHOD, NETWORK ELEMENT, APPARATUS, AND STORAGE MEDIUM**

(30) Priority: 27.07.2022 CN 202210891540
(71) Applicant: Datang Mobile Communications Equipment Co., Ltd., Beijing 100085 (CN)
(72) Inventor: ZHOU, Ye, Beijing 100085 (CN)
(74) Representative: Cabinet Nony
(86) International application number: PCT/CN2023/100688
(87) International publication number: WO 2024/021921

(57) **Abstract**

The embodiments of the present disclosure provide a wireless resource configuration method, a network element, an apparatus, and a storage medium, the method is applied to a first network element in a wireless access network, and the method comprises: sending a first request message to a second network element in a wireless access network, the first request message being used for requesting the second network element to provide first service data volume information, and the first service data volume information being used for configuring wireless resources; receiving the first service data volume information sent by the second network element.

## Description

### CROSS-REFERENCES TO RELATED APPLICATIONS

The present application claims priority to Chinese patent application No. 202210891540.8 filed on July 27, 2022, entitled "Wireless Resource Configuration Method, Network Element, Apparatus, and Storage Medium", which is hereby incorporated by reference in its entirety.

### FIELD

The present application relates to the field of radio communications, and in particular, to methods and apparatuses for radio resource configuration, network elements, and a storage medium.

### BACKGROUND

In order to adapt to increasingly diverse service requirements, carrier aggregation, dual connectivity and other radio resource configuration enhancement mechanisms are introduced to radio communication networks, which allows a terminal (also known as user equipment, UE) being able to simultaneously use multiple cells to exchange user data with a network. For example, a service with a high requirement for latency and a low requirement for bandwidth is more suitable for transmitting service data through a more stable low-frequency cell, while a service with a low requirement for latency and a high requirement for bandwidth is more suitable for transmitting service data through a high-frequency cell with a larger bandwidth. However, in practice, there is still a type of service whose bandwidth requirement fluctuates greatly. In a previous minute, a large amount of data needs to be transmitted, while in a next minute, only a small amount of data needs to be transmitted. Therefore, in practice, the network needs to dynamically configure radio resources based on real-time service volume (or its short-term predicted value).

However, a user plane and control plane separation mechanism for base station is introduced to new radio (NR) and/or 5G network. The control plane part configures radio resources, and only the user plane part knows the real-time service volume, which makes it impossible for the network to achieve the function of dynamically configuring radio resources based on the real-time service volume (or its short-term predicted value).

In addition, the dual connectivity is also used in 5G network. Similar to the above scenario, a master node in the dual connectivity is generally the one that configures the radio resources, and for some services, only a secondary node knows the real-time service volume, which makes it impossible for the network to achieve the function of dynamically configuring radio resources based on the real-time service volume (or its short-term predicted value).

### BRIEF SUMMARY

In response to the problems in the related art, embodiments of the present application provide methods and apparatuses for radio resource configuration, network elements, and a storage medium.

An embodiment of the present application provides a method for radio resource configuration, performed by a first network element in a radio access network, including:
transmitting a first request message to a second network element in the radio access network, where the first request message is used to request the second network element to provide first service data volume information, and the first service data volume information is used to configure a radio resource; and
receiving the first service data volume information transmitted from the second network element.

In an embodiment, after receiving the first service data volume information transmitted from the second network element, the method further includes:
triggering a procedure for radio resource configuration based on the first service data volume information or first service data volume prediction information, where
the first service data volume prediction information is generated based on the first service data volume information.

In an embodiment, after receiving the first service data volume information transmitted from the second network element, the method further includes:
transmitting a second request message to a third network element in the radio access network, where the second request message is used to request the third network element to configure a radio resource, the second request message includes the first service data volume information or first service data volume prediction information, where
the first service data volume prediction information is generated based on the first service data volume information.

In an embodiment, the first service data volume information includes one or more of the following:
a sum of sizes of all service data packets transmitted through the second network element for a specified terminal and a specified transmission direction within a specified time interval;
a sum of sizes of all service data packets belonging to a specified protocol data unit (PDU) session transmitted through the second network element for a specified terminal and a specified transmission direction within a specified time interval;
a sum of sizes of all service data packets of a specified data radio bearer (DRB) transmitted through the second network element for a specified terminal and a specified transmission direction within a specified time interval;
a sum of sizes of all service data packets of a specified unicast quality of service (QoS) flow transmitted through the second network element for a specified terminal and a specified transmission direction within a specified time interval;
a sum of sizes of all service data packets belonging to a specified multicast/broadcast system (MBS) session transmitted through the second network element within a specified time interval;
a sum of sizes of all service data packets of a specified multicast/broadcast system (MBS) radio bearer (MRB) transmitted through the second network element within a specified time interval; or
a sum of sizes of all service data packets of a specified multicast or broadcast quality of service (QoS) flow transmitted through the second network element within a specified time interval.

In an embodiment, triggering the procedure for radio resource configuration includes one or more of the following:
triggering a procedure for adding or removing data radio bearer (DRB) or multicast/broadcast system radio bearer (MRB);
triggering a procedure for configuring or removing secondary cell or secondary node; or
triggering a procedure for expanding or reducing bandwidth part (BWP).

In an embodiment, triggering the procedure for adding or removing DRB or MRB includes:
in case that service data volume or predicted service data volume in a first transmission direction of a first quality of service (QoS) flow is higher than a first threshold, mapping the first QoS flow in the first transmission direction to a separately configured DRB or MRB for transmission; or,
in case that service data volume or predicted service data volume in a first transmission direction of a first quality of service (QoS) flow is lower than a second threshold, mapping the first QoS flow in the first transmission direction and a second QoS flow in the first transmission direction to a same DRB or MRB for transmission, where a QoS requirement for the second QoS flow is higher than a QoS requirement for the first QoS flow.

In an embodiment, triggering the procedure for configuring or removing secondary cell or secondary node includes:
in case that service data volume or predicted service data volume of a first terminal is higher than a third threshold, configuring a high-frequency hotspot cell as a secondary cell for the first terminal, or configuring a high-frequency hotspot node as a secondary node for the first terminal; or,
in case that service data volume or predicted service data volume of a first terminal is lower than a fourth threshold, removing a secondary cell or a secondary node for the first terminal.

In an embodiment, triggering the procedure for expanding or reducing BWP includes:
expanding or reducing a BWP width for a first terminal or a first multicast service in a first cell based on service data volume or predicted service data volume of the first terminal or the first multicast service in the first cell.

In an embodiment, the first network element includes a central unit-control plane of a radio access network node or a master node in dual connectivity.

An embodiment of the present application further provides a method for radio resource configuration, performed by a second network element in a radio access network, including:
receiving a first request message transmitted from a first network element in the radio access network, where the first request message is used to request the second network element to provide first service data volume information, and the first service data volume information is used to configure a radio resource; and
transmitting the first service data volume information to the first network element based on the first request message.

In an embodiment, the first service data volume information includes one or more of the following:
a sum of sizes of all service data packets transmitted through the second network element for a specified terminal and a specified transmission direction within a specified time interval;
a sum of sizes of all service data packets belonging to a specified protocol data unit (PDU) session transmitted through the second network element for a specified terminal and a specified transmission direction within a specified time interval;
a sum of sizes of all service data packets of a specified data radio bearer (DRB) transmitted through the second network element for a specified terminal and a specified transmission direction within a specified time interval;
a sum of sizes of all service data packets of a specified unicast quality of service (QoS) flow transmitted through the second network element for a specified terminal and a specified transmission direction within a specified time interval;
a sum of sizes of all service data packets belonging to a specified multicast/broadcast system (MBS) session transmitted through the second network element within a specified time interval;
a sum of sizes of all service data packets of a specified multicast/broadcast system (MBS) radio bearer (MRB) transmitted through the second network element within a specified time interval; or
a sum of sizes of all service data packets of a specified multicast or broadcast quality of service (QoS) flow transmitted through the second network element within a specified time interval.

In an embodiment, the second network element includes a central unit-user plane of a radio access network node, a distributed unit of a radio access network node, or a secondary node in dual connectivity.

An embodiment of the present application further provides a first network element in a radio access network, including a memory, a transceiver and a processor,
where the memory is used for storing a computer program, the transceiver is used for transmitting and receiving data under control of the processor, and the processor is used for reading the computer program in the memory and performing the following operations:
transmitting a first request message to a second network element in the radio access network, where the first request message is used to request the second network element to provide first service data volume information, and the first service data volume information is used to configure a radio resource; and
receiving the first service data volume information transmitted from the second network element.

In an embodiment, after receiving the first service data volume information transmitted from the second network element, the operations further include:
triggering a procedure for radio resource configuration based on the first service data volume information or first service data volume prediction information, where
the first service data volume prediction information is generated based on the first service data volume information.

In an embodiment, after receiving the first service data volume information transmitted from the second network element, the operations further include:
transmitting a second request message to a third network element in the radio access network, where the second request message is used to request the third network element to configure a radio resource, the second request message includes the first service data volume information or first service data volume prediction information, where
the first service data volume prediction information is generated based on the first service data volume information.

In an embodiment, the first service data volume information includes one or more of the following:
a sum of sizes of all service data packets transmitted through the second network element for a specified terminal and a specified transmission direction within a specified time interval;
a sum of sizes of all service data packets belonging to a specified protocol data unit (PDU) session transmitted through the second network element for a specified terminal and a specified transmission direction within a specified time interval;
a sum of sizes of all service data packets of a specified data radio bearer (DRB) transmitted through the second network element for a specified terminal and a specified transmission direction within a specified time interval;
a sum of sizes of all service data packets of a specified unicast quality of service (QoS) flow transmitted through the second network element for a specified terminal and a specified transmission direction within a specified time interval;
a sum of sizes of all service data packets belonging to a specified multicast/broadcast system (MBS) session transmitted through the second network element within a specified time interval;
a sum of sizes of all service data packets of a specified multicast/broadcast system (MBS) radio bearer (MRB) transmitted through the second network element within a specified time interval; or
a sum of sizes of all service data packets of a specified multicast or broadcast quality of service (QoS) flow transmitted through the second network element within a specified time interval.

In an embodiment, triggering the procedure for radio resource configuration includes one or more of the following:
triggering a procedure for adding or removing data radio bearer (DRB) or multicast/broadcast system radio bearer (MRB);
triggering a procedure for configuring or removing secondary cell or secondary node; or
triggering a procedure for expanding or reducing bandwidth part (BWP).

In an embodiment, triggering the procedure for adding or removing DRB or MRB includes:
in case that service data volume or predicted service data volume in a first transmission direction of a first quality of service (QoS) flow is higher than a first threshold, mapping the first QoS flow in the first transmission direction to a separately configured DRB or MRB for transmission; or,
in case that service data volume or predicted service data volume in a first transmission direction of a first quality of service (QoS) flow is lower than a second threshold, mapping the first QoS flow in the first transmission direction and a second QoS flow in the first transmission direction to a same DRB or MRB for transmission, where a QoS requirement for the second QoS flow is higher than a QoS requirement for the first QoS flow.

In an embodiment, triggering the procedure for configuring or removing secondary cell or secondary node includes:
in case that service data volume or predicted service data volume of a first terminal is higher than a third threshold, configuring a high-frequency hotspot cell as a secondary cell for the first terminal, or configuring a high-frequency hotspot node as a secondary node for the first terminal; or,
in case that service data volume or predicted service data volume of a first terminal is lower than a fourth threshold, removing a secondary cell or a secondary node for the first terminal.

In an embodiment, triggering the procedure for expanding or reducing BWP includes:
expanding or reducing a BWP width for a first terminal or a first multicast service in a first cell based on service data volume or predicted service data volume of the first terminal or the first multicast service in the first cell.

In an embodiment, the first network element includes a central unit-control plane of a radio access network node or a master node in dual connectivity.

An embodiment of the present application further provides a second network element in a radio access network, including a memory, a transceiver and a processor,
where the memory is used for storing a computer program, the transceiver is used for transmitting and receiving data under control of the processor, and the processor is used for reading the computer program in the memory and performing the following operations:
receiving a first request message transmitted from a first network element in the radio access network, where the first request message is used to request the second network element to provide first service data volume information, and the first service data volume information is used to configure a radio resource; and
transmitting the first service data volume information to the first network element based on the first request message.

In an embodiment, the first service data volume information includes one or more of the following:
a sum of sizes of all service data packets transmitted through the second network element for a specified terminal and a specified transmission direction within a specified time interval;
a sum of sizes of all service data packets belonging to a specified protocol data unit (PDU) session transmitted through the second network element for a specified terminal and a specified transmission direction within a specified time interval;
a sum of sizes of all service data packets of a specified data radio bearer (DRB) transmitted through the second network element for a specified terminal and a specified transmission direction within a specified time interval;
a sum of sizes of all service data packets of a specified unicast quality of service (QoS) flow transmitted through the second network element for a specified terminal and a specified transmission direction within a specified time interval;
a sum of sizes of all service data packets belonging to a specified multicast/broadcast system (MBS) session transmitted through the second network element within a specified time interval;
a sum of sizes of all service data packets of a specified multicast/broadcast system (MBS) radio bearer (MRB) transmitted through the second network element within a specified time interval; or
a sum of sizes of all service data packets of a specified multicast or broadcast quality of service (QoS) flow transmitted through the second network element within a specified time interval.

In an embodiment, the second network element includes a central unit-user plane of a radio access network node, a distributed unit of a radio access network node, or a secondary node in dual connectivity.

An embodiment of the present application further provides an apparatus for resource configuration, including:
a first transmitting unit, used for transmitting a first request message to a second network element in a radio access network, where the first request message is used to request the second network element to provide first service data volume information, and the first service data volume information is used to configure a radio resource; and
a first receiving unit, used for receiving the first service data volume information transmitted from the second network element.

An embodiment of the present application further provides an apparatus for radio resource configuration, including:
a second receiving unit, used for receiving a first request message transmitted from a first network element in a radio access network, where the first request message is used to request the second network element to provide first service data volume information, and the first service data volume information is used to configure a radio resource; and
a second transmitting unit, used for transmitting the first service data volume information to the first network element based on the first request message.

An embodiment of the present application further provides a computer readable storage medium storing a computer program that causes a computer to perform any of the methods for radio resource configuration described above.

An embodiment of the present application further provides a communication device storing a computer program that causes the communication device to perform any of the methods for radio resource configuration described above.

An embodiment of the present application further provides a processor readable storage medium storing a computer program that causes a processor to perform any of the methods for radio resource configuration described above.

An embodiment of the present application further provides a chip product storing a computer program that causes the chip product to perform any of the methods for radio resource configuration described above.

In the methods and apparatuses for radio resource configuration, the network elements, and the storage mediums, the first network element may request the first service data volume information from the second network element, and the first network element may perform subsequent optimization operations associated with the radio resource configuration based on the obtained service data volume information, which avoids a problem that the network element for triggering or executing the radio resource configuration in the radio access network cannot obtain the service data volume information, resulting in the inability to meet service requirements or causing waste of resources.

### BRIEF DESCRIPTION OF THE DRAWINGS

In order to illustrate the solutions disclosed in the embodiments of the present application or the related art more clearly, the drawings used in the description of the embodiments or the related art are briefly described below. The drawings in the following description are only some embodiments of the present application, and other drawings may be obtained according to these drawings without any creative work for those skilled in the art.
FIG. 1 is a schematic diagram of a partial architecture of a 5G network according to the related art;
FIG. 2 is a first schematic flowchart of a method for radio resource configuration according to an embodiment of the present application;
FIG. 3 is a second schematic flowchart of a method for radio resource configuration according to an embodiment of the present application;
FIG. 4 is a first schematic diagram of an implementation of a method for radio resource configuration according to an embodiment of the present application;
FIG. 5 is a second schematic diagram of an implementation of a method for radio resource configuration according to an embodiment of the present application;
FIG. 6 is a third schematic diagram of an implementation of a method for radio resource configuration according to an embodiment of the present application;
FIG. 7 is a schematic structural diagram of a first network element in a radio access network according to an embodiment of the present application;
FIG. 8 is a schematic structural diagram of a second network element in a radio access network according to an embodiment of the present application;
FIG. 9 is a first schematic structural diagram of an apparatus for radio resource configuration according to an embodiment of the present application; and
FIG. 10 is a second schematic structural diagram of an apparatus for radio resource configuration according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

In order to facilitate a clearer understanding for the solutions in the embodiments of the present application, some contents related to the embodiments of the present application are first introduced.

### 1. Split radio access network (RAN) node

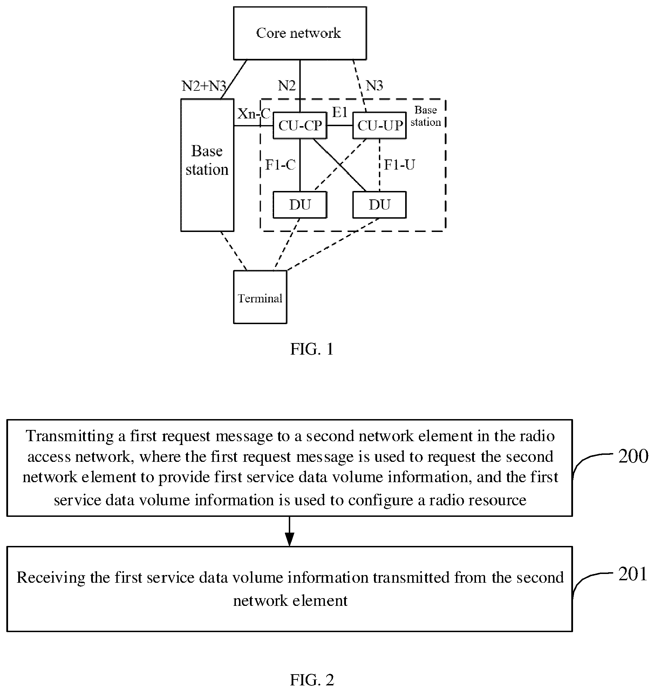

FIG. 1 is a schematic diagram of a partial architecture of a 5G network according to the related art, where FIG. 1 shows partial architecture closely related to an air interface. As shown in FIG. 1, in new radio (NR) and similar communication systems, a logical next generation radio access network (NG-RAN) node (e.g., a base station) may be further divided into a central unit-control plane (CU-CP), one or more central unit-user planes (CU-UPs) (only one CU-UP is used as an example in FIG. 1), and one or more distributed units (DUs). This structure is referred to as "CU-CP/UP split".

In case that the NG-RAN node is an NG-RAN node using NR technology, that is, the NG-RAN node is a gNB, a gNB-CU-CP is connected to a gNB-DU via an F1-C interface, and the gNB-CU-CP is connected to a gNB-CU-UP via an E1 interface. A connection N2 between the gNB and a control plane of a core network (5GC) ends at the gNB-CU-CP, and the lower layer part of the air interface connection between the gNB and a mobile terminal ends at the gNB-DU.

In case that there is user plane data needs to be transmitted, an N3 transmission channel is established between the gNB-CU-UP and the 5GC, and an F1-U transmission channel is established between the gNB-DU and the gNB-CU-UP. Downlink data is transmitted from the 5GC to the gNB-CU-UP via the N3 transmission channel, then to the gNB-DU via the F1-U transmission channel, and finally transmitted to UE through the air interface; uplink data is the opposite. Since the user plane data does not pass through the gNB-CU-CP, the gNB-CU-CP cannot know the real-time service volume through an internal mechanism.

In addition, the parameters that may indirectly reflect the service volume, such as interaction buffer information between access layer nodes, also only occur between the participating nodes of the user plane. For example, the UE may report to the gNB-DU how much uplink data needs to be transmitted at a certain moment, and the gNB-DU may handle dynamic scheduling; the gNB-DU may report downlink buffer information of the gNB-DU to the gNB-CU-UP, and the gNB-CU-UP may dynamically adjust a downlink transmission speed to avoid gNB-DU overload. The purpose of these information is very short-term dynamic resource scheduling and is not suitable for adjusting semi-static radio resource configuration.

For an air interface control plane function related to radio resource configuration, such as how to map a quality of service (QoS) flow and a data radio bearer (DRB), since it is associated with both the gNB-DU and the gNB-CU-UP, in order to facilitate unified control and management, this part of the air interface function interacts with the UE through a radio resource control (RRC) module in the gNB-CU-CP, and the signaling interacted is referred to as RRC signaling. Typical RRC signaling includes RRC reconfiguration message (*RRCReconfiguration* message). In particular, downlink RRC signaling is generated by the gNB-CU-CP in general.

In general, the gNB-CU-CP encapsulates an RRC message into a layer 2 data packet and transmits it to the gNB-DU via F1-C, which is then forwarded to the UE via the air interface by the gNB-DU. However, in some special scenarios (such as part of scenarios in handover or dual connectivity), there is no direct RRC connection between the gNB-CU-CP and the UE. The gNB-CU-CP forwards the RRC message generated by itself to the UE via another node (such as a source node in handover or a master node in dual connectivity). In case that the "another node" is also a split node, then similarly, the generated RRC message is transmitted to the gNB-CU-CP part of the "another node", and after being encapsulated into a layer 2 data packet, then transmitted to the UE via the gNB-DU part of the "another node".

In addition, triggers of configurations for air interface handover and dual connectivity (DC) are also gNB-CU-CP. Handover refers to a procedure in which a UE is connected to an RAN node before the handover procedure and connected to another RAN node after the handover procedure. Dual connectivity refers to a state in which a UE is connected to two nodes at the same time, where one of the nodes is referred to as a master node (MN), and another one of the nodes is referred to as a secondary node (SN). However, a source node in the handover cannot unilaterally determine the radio resource configuration after the handover, and the master node in the dual connectivity cannot unilaterally determine the radio resource configuration on the secondary node side after the dual connectivity is established or modified. The gNB-CU-CP shall first transmit at least part of UE context information (including service information) to a target node in the handover or the secondary node in the dual connectivity, and then the target node or the secondary node generates radio resource configuration information in the format of RRC message or RRC information and feeds it back to the gNB-CU-CP, and then transmits it to the UE. In a typical handover procedure and secondary node adding procedure (referring to a procedure of keeping the MN unchanged but adding a new SN), the target node in the handover and the secondary node to be added do not have any UE-associated information before the procedure is triggered, and naturally do not know current and historical service volume of the UE.

Similarly, trigger of configuration for carrier aggregation (CA) is also gNB-CU-CP. Carrier aggregation refers to a state where a UE is simultaneously connected to multiple cells under a base station (a gNB-DU in a split scenario), one of the cells is referred to as a special cell (SpCell) and the other cells are referred to as secondary cells (SCell), and the SpCell and SCell are collectively referred to as serving cells. However, the gNB-CU-CP cannot unilaterally determine the radio resource configuration applied to the gNB-DU. The gNB-CU-CP shall first transmit at least part of UE context information (including service information) and an indication of which cells are configured as serving cells to the gNB-DU, and then the gNB-DU generates radio resource configuration information in the format of an RRC message or RRC information and feeds it back to the gNB-CU-CP, and then transmit it to the UE. In a typical handover scenario, the gNB-DU on the target side does not have any UE-associated information before the UE context establishment procedure (the procedure in which the gNB-CU-CP indicates the gNB-DU to establish a context for a specific UE) is triggered, and naturally does not know current and historical service volume of the UE.

In case that the NG-RAN node is a node using the evolved universal terrestrial radio access (E-UTRA) technology, that is, an ng-eNB, an ng-eNB-CU-CP is connected to an ng-eNB-DU via a W1-C interface, and the ng-eNB-CU-CP is connected to the ng-eNB-CU-UP via an E1 interface. A connection N2 between the ng-eNB and a control plane of a core network (5GC) ends at the ng-eNB-CU-CP, and the lower layer part of the air interface connection between the ng-eNB and a mobile terminal ends at the ng-eNB-DU.

In case that there is user plane data needs to be transmitted, an N3 transmission channel is established between the eNB-CU-UP and the 5GC, and a W1-U transmission channel is established between the eNB-DU and the eNB-CU-UP. Other functions are similar to the case where the NG-RAN node is a gNB and are not repeated here.

In addition, in an evolved packet system (EPS), an evolved universal mobile telecommunication system (UMTS) terrestrial radio access network (E-UTRAN) node using NR technology, that is, en-gNB, may also be further divided into a central unit-control plane (i.e. CU-CP), one or more central unit-user planes (i.e. CU-UPs), and one or more distributed units (i.e. DUs). The en-gNB may only act as a secondary node in dual connectivity and has no connection with a control plane of an evolved packet core (EPC). The en-gNB-CU-CP is connected to the en-gNB-DU via an F1-C interface, and the en-gNB-CU-CP is connected to the en-gNB-CU-UP via an E1 interface. A lower layer part of the air interface connection between the en-gNB and a mobile terminal ends at the en-gNB-DU.

In case that there is user plane data needs to be transmitted, an S1-U transmission channel is established between the en-gNB-CU-UP and the EPC, and an F1-U transmission channel is established between the en-gNB-DU and the en-gNB-CU-UP. Other functions are similar to the case where the NG-RAN node is a gNB and are not repeated here.

### 2. Dual connectivity

In order to adapt to complex and diverse service requirements, the dual connectivity technology is proposed in the industry, which allows a terminal being able to simultaneously use two RAN nodes for data transmission. One of the RAN nodes is referred to as a master node, and another of the RAN nodes is referred to as a secondary node, which are connected through an Xn interface. In general, the cells under the master node are generally low-frequency and wide-coverage cells with narrow bandwidth but high stability, which are suitable for transmitting signaling and user data with high requirement for reliability. The cells under the secondary node are generally high-frequency and wide-coverage cells with high bandwidth but poor stability, which is suitable for transmitting services with high requirement for bandwidth. Except for the radio resource configuration procedure that mainly affects the secondary node itself, which may be triggered by the secondary node, most of the radio resource configuration procedures, including the triggering in handover, may only be triggered by the master node.

In the dual connectivity scenario in 5G network, there are 6 types of user data organization methods, of which the two most important types are: MN-terminated MCG bearer (MCG bearer terminated at MN, where MCG is master cell group), and SN-terminated SCG bearer (SCG bearer terminated at SN, where SCG is secondary cell group). For an SN-terminated SCG bearer, downlink user data is directly issued from a core network to the secondary node and transmitted to a UE via an air interface, and uplink user data is directly uploaded from the UE to the secondary node and forwarded to the core network. The master node has no way of knowing current and historical data volume of this part service.

### 3. User data organization

In NG-RAN, there are mainly three organization granularities for unicast service data of a UE: protocol data unit (PDU) session, DRB and QoS flow. Among them, both PDU session and QoS flow start at core network and terminate at UE, and DRB starts at NG-RAN and terminates at UE.

PDU session has the coarsest granularity, and generally corresponds one-to-one to a website visited by a UE.

QoS flow is a subdivision of PDU session, which refers to which type of data packet the core network believes should be transmitted in a way that meets which QoS requirement.

The granularity of DRB is between the granularity of PDU session and the granularity of QoS flow. For a PDU session, NG-RAN establishes one or more DRBs based on the QoS flow list and the QoS requirement of each QoS flow provided by the core network, where each DRB may include one or more QoS flows, or the uplink or downlink parts of one or more QoS flows. Data belonging to a same DRB are processed in a same way at the air interface.

Based on its own strategy, an NG-RAN may merge multiple QoS flows into one DRB to simplify air interface processing, or configure a DRB for each QoS flow for refined scheduling. Uplink and downlink directions of a QoS flow may be mapped to different DRBs. In addition, if the uplink or downlink part of a QoS flow has no data transmission temporarily, the NG-RAN may not map it to any DRB, and reconfigure the radio resource when it has data to transmit. The mapping relationship among PDU session, QoS flow and DRB, as well as the specific configuration for a DRB, are all part of the radio resource configuration.

In addition, there are mainly three organization granularities for multicast or broadcast data of a UE: multicast/broadcast system (MBS) session, MBS radio bearer (MRB) and QoS flow. MBS session is similar to PDU session, and MRB is similar to DRB. Multicast broadcast QoS flow is similar to unicast QoS flow. The processing method of NG-RAN is also similar and is not repeated here. For the convenience of description, PDU session and MBS session are sometimes collectively referred to as 5G service session, and MRB and DRB are collectively referred to as radio bearer. Multicast and broadcast data only have downlink data, but no uplink data.

The situation in E-UTRAN is much simpler: unicast service data has only one organization granularity, namely DRB.

### 4. Bandwidth part (BWP)

In NR technology, a bandwidth of a cell may be very large. In order to minimize the power consumption of UE, a concept of BWP is proposed in the industry. A cell only uses radio resources within a certain bandwidth to schedule data for a UE or a multicast broadcast service, and the UE only needs to monitor this part of bandwidth to complete data transmission and reception. This part of bandwidth is referred to as BWP and is a part of the radio resource configuration. The network notifies BWP to the UE through RRC signaling.

FIG. 2 is a first schematic flowchart of a method for radio resource configuration according to an embodiment of the present application. The method is performed by a first network element in a radio access network. As shown in FIG. 2, the method includes the following steps.

Step 200: transmitting a first request message to a second network element in the radio access network, where the first request message is used to request the second network element to provide first service data volume information, and the first service data volume information is used to configure a radio resource.

Step 201: receiving the first service data volume information transmitted from the second network element.

In an embodiment, in order to solve a problem in the related art that a radio access network node in the user plane and control plane split mechanism, or a master node in dual connectivity scenario, or other network elements in the radio access network cannot dynamically configure radio resource based on service data volume information, which results in a problem that a service requirement cannot be met due to too low configuration or resource waste is caused by too high configuration, in the embodiment of the present application, the first network element in the radio access network (hereinafter referred to as the first network element) may request the second network element in the radio access network (hereinafter referred to as the second network element) to provide the service data volume information.

In an embodiment, the first network element may include a central unit-control plane (i.e., CU-CP) of a radio access network node (e.g., a gNB, ng-eNB, en-gNB, etc.) or a master node (i.e., MN) in dual connectivity.

In an embodiment, the second network element may include a central unit-user plane (i.e., CU-UP) of a radio access network node (e.g., a gNB, ng-eNB, en-gNB, etc.), a distributed unit (i.e., DU) of a radio access network node (e.g., a gNB, ng-eNB, en-gNB, etc.) or a secondary node in dual connectivity.

For example, a gNB-CU-CP may request a gNB-CU-UP to provide the first service data volume information, and the requested content may be to request the gNB-CU-UP to immediately feedback the current service data volume, or to request the gNB-CU-UP to periodically feedback the service data volume, or to feedback the service data volume when certain conditions are met. The first request message may be a separate E1 interface message, or may be included in other E1 interface messages and transmitted together with other information.

For example, a master node may request a secondary node to provide the first service data volume information, and the requested content may be to request the secondary node to immediately feedback the current service data volume, or to request the secondary node to periodically feedback the service data volume, or to feedback the service data volume when certain conditions are met. The first request message may be a separate Xn interface message, or may be included in other Xn interface messages and transmitted together with other information.

For example, a gNB-CU-CP may request a gNB-DU to provide the first service data volume information, and the requested content may be to request the gNB-DU to immediately feedback the current service data volume, or to request the secondary node to periodically feedback the service data volume, or to feedback the service data volume when certain conditions are met. The first request message may be a separate F1 interface message, or may be included in other F1 interface messages and transmitted together with other information.

In an embodiment, the first service data volume information may include one or more of the following.
(1) A sum of sizes of all service data packets transmitted through the second network element for a specified terminal and a specified transmission direction within a specified time interval.

For example, the first request message may indicate which time interval, terminal, transmission direction (such as uplink or downlink direction), and service data packets the second network element is requested to provide service data volume information for.

Taking a gNB-CU-CP requesting a gNB-CU-UP for the first service data volume information as an example, it may be that the gNB-CU-UP is requested to provide the sum of the sizes of all service data packets transmitted through the gNB-CU-UP in a certain transmission direction for a certain terminal within a certain time interval.

Taking a master node requesting a secondary node for the first service data volume information as an example, it may be that the secondary node is requested to provide the sum of the sizes of all service data packets in a certain transmission direction, transmitted through a packet data convergence protocol (PDCP) layer of the secondary node, for a certain terminal within a certain time interval.

(2) A sum of sizes of all service data packets belonging to a specified protocol data unit (PDU) session transmitted through the second network element for a specified terminal and a specified transmission direction within a specified time interval.

Taking a gNB-CU-CP requesting a gNB-CU-UP for the first service data volume information as an example, it may be that the gNB-CU-UP is requested to provide the sum of the sizes of all service data packets in a certain transmission direction, belonging to a certain PDU session and transmitted through the gNB-CU-UP, for a certain terminal within a certain time interval.

Taking a master node requesting a secondary node for the first service data volume information as an example, it may be that the secondary node is requested to provide the sum of the sizes of all service data packets in a certain transmission direction, belonging to a certain PDU session and transmitted through the PDCP layer of the secondary node, for a certain terminal within a certain time interval.

(3) A sum of sizes of all service data packets of a specified data radio bearer (DRB) transmitted through the second network element for a specified terminal and a specified transmission direction within a specified time interval.

Taking a gNB-CU-CP requesting a gNB-CU-UP for the first service data volume information as an example, it may be that the gNB-CU-UP is requested to provide the sum of the sizes of all service data packets of a certain DRB in a certain transmission direction, transmitted through the gNB-CU-UP, for a certain terminal within a certain time interval.

Taking a master node requesting a secondary node for the first service data volume information as an example, it may be that the secondary node is requested to provide the sum of the sizes of all service data packets of a certain DRB in a certain transmission, transmitted through the PDCP layer of the secondary node, for a certain terminal within a certain time interval.

(4) A sum of sizes of all service data packets of a specified unicast quality of service (QoS) flow transmitted through the second network element for a specified terminal and a specified transmission direction within a specified time interval.

Taking a gNB-CU-CP requesting a gNB-CU-UP for the first service data volume information as an example, it may be that the gNB-CU-UP is requested to provide the sum of the sizes of all service data packets of a certain unicast QoS flow in a certain transmission direction, transmitted through the gNB-CU-UP, for a certain terminal within a certain time interval.

Taking a master node requesting a secondary node for the first service data volume information as an example, it may be that the secondary node is requested to provide the sum of the sizes of all service data packets of a certain unicast QoS flow in a certain transmission direction, transmitted through the PDCP layer of the secondary node, for a certain terminal within a certain time interval.

(5) A sum of sizes of all service data packets belonging to a specified multicast/broadcast system (MBS) session transmitted through the second network element within a specified time interval.

For example, the first request message may indicate the service data volume information of which time interval and which multicast broadcast service data packets are requested to be provided by the second network element.

Taking a gNB-CU-CP requesting a gNB-CU-UP for the first service data volume information as an example, it may be that the gNB-CU-UP is requested to provide the sum of the sizes of all service data packets belonging to a certain MBS session and transmitted through the gNB-CU-UP within a certain time interval.

Taking a master node requesting a secondary node for the first service data volume information as an example, it may be that the secondary node is requested to provide the sum of the sizes of all service data packets belonging to a certain MBS session and transmitted through the PDCP layer of the secondary node within a certain time interval.

(6) A sum of sizes of all service data packets of a specified multicast/broadcast system (MBS) radio bearer (MRB) transmitted through the second network element within a specified time interval.

Taking a gNB-CU-CP requesting a gNB-CU-UP for the first service data volume information as an example, it may be to that the gNB-CU-UP is requested to provide the sum of the sizes of all service data packets of a certain MRB transmitted through the gNB-CU-UP within a certain time interval.

Taking a master node requesting a secondary node for the first service data volume information as an example, it may be that the secondary node is requested to provide the sum of the sizes of all service data packets of a certain MRB transmitted through the PDCP layer of the secondary node within a certain time interval.

(7) A sum of sizes of all service data packets of a specified multicast or broadcast quality of service (QoS) flow transmitted through the second network element within a specified time interval.

Taking a gNB-CU-CP requesting a gNB-CU-UP for the first service data volume information as an example, it may be that the gNB-CU-UP is requested to provide the sum of the sizes of all service data packets of a certain multicast or broadcast QoS flow transmitted through the gNB-CU-UP within a certain time interval.

Taking a master node requesting a secondary node for the first service data volume information as an example, it may be that the secondary node is requested to provide the sum of the sizes of all service data packets of a certain multicast or broadcast QoS flow transmitted through the PDCP layer of the secondary node within a certain time interval.

After receiving the first request message, the second network element may transmit the corresponding service data volume information to the first network element based on the content requested by the first request message. After receiving the service data volume information, the first network element may perform subsequent optimization operations associated with radio resource configuration based on the service data volume information, such as triggering radio resource configuration, or transmitting the service data volume information to other network elements for the other network elements to optimize and configure radio resources.

In the method for radio resource configuration provided by the embodiments of the present application, the first network element may request the first service data volume information from the second network element, and the first network element may perform subsequent optimization operations associated with the radio resource configuration based on the obtained service data volume information, which avoids a problem that the network element for triggering or executing the radio resource configuration in the radio access network cannot obtain the service data volume information, resulting in the inability to meet service requirements or causing waste of resources.

In an embodiment, after receiving the first service data volume information transmitted from the second network element, the method further includes:
triggering a procedure for radio resource configuration based on the first service data volume information or first service data volume prediction information, where
the first service data volume prediction information is generated based on the first service data volume information.

In an embodiment, after the first network element receives the first service data volume information transmitted from the second network element, the procedure for radio resource configuration may be triggered based on the first service data volume information.

In another embodiment, after receiving the first service data volume information transmitted from the second network element, the first network element may first predict the future short-term-type service data volume based on the first service data volume information to generate the first service data volume prediction information. For example, the first service data volume prediction information may be a prediction of how much data volume of service data belonging to a certain QoS flow of a certain terminal needs to be transmitted within a certain period of time in the future.

The prediction of the future short-term-type service data volume may be implemented by using a traditional prediction model. The specific prediction model is not limited here, as long as the prediction function may be realized. When predicting the service data volume, the QoS characteristic of the service, the capability of the terminal, the location of the terminal and other information may also be combined to obtain a more accurate prediction result.

After generating the first service data volume prediction information, the first network element may trigger the procedure for radio resource configuration based on the first service data volume prediction information.

In an embodiment, triggering the procedure for radio resource configuration based on the first service data volume information or first service data volume prediction information may include one or more of the following.
(1) Triggering a procedure for adding or removing data radio bearer (DRB) or multicast/broadcast system radio bearer (MRB).

For example, in case that the downlink service data volume on a certain QoS flow is high, the procedure for radio resource configuration may be triggered to configure a DRB or MRB separately for the downlink part of the QoS flow, that is, to add DRB or MRB to reduce the air interface load.

For example, in case that the downlink service data volume on a certain QoS flow is low, the procedure for radio resource configuration may be triggered to merge the downlink part of the QoS flow and the downlink part of other QoS flows into one DRB or MRB for transmission, that is, to remove DRB or MRB to reduce the occupation of DRB identifiers and MRB identifiers, and then the network may have more space to establish more DRBs or MRBs for other services for more refined scheduling.

(2) Triggering a procedure for configuring or removing secondary cell or secondary node.

For example, in case that the service data volume of a certain terminal is high, the procedure for radio resource configuration may be triggered to configure a high-frequency hotspot cell as a secondary cell of the terminal, or to configure a high-frequency hotspot node as a secondary node of the terminal, to avoid all the services of the terminal being transmitted in a low-frequency wide coverage cell, and avoiding congestion caused by exhaustion of radio resources in the low-frequency wide coverage cell.

For example, in case that the service data volume of a certain terminal is low, the procedure for radio resource configuration may be triggered to remove the secondary cell or secondary node for the terminal, to simplify signaling and data routing, improve reliability, and reduce the interface signaling load within the RAN.

(3) Triggering a procedure for expanding or reducing bandwidth part (BWP).

For example, in case that the service data volume of a certain terminal in a certain cell is high, the procedure for radio resource configuration may be triggered to expand the BWP for the terminal in the cell to meet the service requirements.

For example, in case that the service data volume of a certain terminal in a certain cell is low, the procedure for radio resource configuration may be triggered to reduce the BWP for the terminal in the cell to reduce the power consumption of the terminal.

In an embodiment, after receiving the first service data volume information transmitted from the second network element, the method further includes:
transmitting a second request message to a third network element in the radio access network, where the second request message is used to request the third network element to configure a radio resource, the second request message includes the first service data volume information or first service data volume prediction information, where
the first service data volume prediction information is generated based on the first service data volume information.

In an embodiment, after obtaining the first service data volume information or generating the first service data volume prediction information, the first network element may transmit the second request message to the third network element, where the second request message is used to request the third network element to configure the radio resource, and the second request message carries the first service data volume information obtained by the first network element or the first service data volume prediction information generated by the first network element.

In an embodiment, the third network element may be a target node in a handover scenario, or a CU part of a target node in a handover scenario, or a CU-CP part of a target node in a handover scenario. In this case, the first network element may be a source node in the handover scenario, and the second request message may be a handover request message or a source-to-target transparent container.

In an embodiment, the third network element may be a secondary node in a dual connectivity scenario, or a CU part of a secondary node in a dual connectivity scenario, or a CU-CP part of a secondary node in a dual connectivity scenario. In this case, the first network element may be the master node in the dual connectivity scenario, and the second request message may be a secondary node adding request message, or a secondary node modification request message.

In an embodiment, the third network element may be a CU-UP part of a radio access network node, the corresponding first network element may be a CU-CP part of the radio access network node, the second request message may be a bearer context setup request message, or a broadcast bearer context setup request message, or a multicast bearer context setup request message, or a bearer context modification request message, or a broadcast bearer context modification request message, or a multicast bearer context modification request message.

In an embodiment, the third network element may be a DU part of a radio access network node, the corresponding first network element may be a CU-CP part of the radio access network node, the second request message may be a terminal context setup request message, or a broadcast context setup request message, or a multicast context setup request message, or a terminal context modification request message, or a broadcast context modification request message, or a multicast context modification request message.

After receiving the second request message, the third network element may perform a radio resource configuration operation based on the first service data volume information or the first service data volume prediction information in the second request message, such as adding or removing DRB or MRB, configuring or removing SCell, configuring or removing secondary node in dual connectivity, expanding or reducing BWP, etc.

In an embodiment, triggering the procedure for adding or removing DRB or MRB includes:
in case that service data volume or predicted service data volume in a first transmission direction of a first quality of service (QoS) flow is higher than a first threshold, mapping the first QoS flow in the first transmission direction to a separately configured DRB or MRB for transmission; or,
in case that service data volume or predicted service data volume in a first transmission direction of a first quality of service (QoS) flow is lower than a second threshold, mapping the first QoS flow in the first transmission direction and a second QoS flow in the first transmission direction to a same DRB or MRB for transmission, where a QoS requirement for the second QoS flow is higher than a QoS requirement for the first QoS flow.

In an embodiment, the first QoS flow may refer to any QoS flow, and the first transmission direction may refer to any transmission direction, which is not limited here.

Both the first threshold and the second threshold may be set thresholds of data volume, and the specific values may be set as needed, which is not limited here.

After obtaining the first service data volume information or generating the first service data volume prediction information, the first network element may determine the service data volume or predicted service data volume of each QoS flow in each transmission direction based on these information, and then determine, based on the service data volume or predicted service data volume of each QoS flow in each transmission direction, whether to trigger the procedure for adjusting the radio resource configuration, such as triggering the procedure for adding or removing DRB or MRB.

For example, in case that the current service data volume or predicted service data volume in a certain transmission direction of QoS flow 1 is higher than a threshold, the first network element may separately configure DRB or MRB for the transmission direction of QoS flow 1 to reduce the air interface load.

For example, in case that the current service data volume or predicted service data volume in a certain transmission direction of QoS flow 1 is lower than a threshold, the QoS requirement for QoS flow 1 is lower than the QoS requirement for QoS flow 2, and both the two QoS flows do not need to guarantee the transmission rate, the first network element may map the QoS flow 1 and parts of QoS flow 2 in this transmission direction to a same DRB or MRB for transmission, and the DRB or MRB may be set based on the QoS requirement for QoS flow 2.

Processing the service data packets on QoS flow 1 based on the relatively higher QoS requirement for QoS flow 2 does not increase too much air interface load, and the establishment of DRB or MRB is reduced. On one hand, this operation may reduce the processing complexity of the network and the terminal. On the other hand, since a terminal may only establish 32 DRBs at most and a cell may only establish 512 MRBs at most, this operation also reduces the occupation of DRB identifiers and MRB identifiers, and the network may have more space to establish more DRBs or MRBs for other services for more refined scheduling, which reduces the air interface load greatly.

In an embodiment, triggering the procedure for configuring or removing secondary cell or secondary node includes:
in case that service data volume or predicted service data volume of a first terminal is higher than a third threshold, configuring a high-frequency hotspot cell as a secondary cell for the first terminal, or configuring a high-frequency hotspot node as a secondary node for the first terminal; or,
in case that service data volume or predicted service data volume of a first terminal is lower than a fourth threshold, removing a secondary cell or a secondary node for the first terminal.

In an embodiment, the first terminal may refer to any terminal, which is not limited here.

Both the third threshold and the fourth threshold may be set thresholds of data volume, and the specific values may be set as needed, which are not limited here.

After obtaining the first service data volume information or generating the first service data volume prediction information, the first network element may determine the service data volume or predicted service data volume of each terminal based on these information, and then determine, based on the service data volume or the predicted service data volume of each terminal, whether to trigger the procedure for adjusting the radio resource configuration, such as triggering the procedure for configuring or removing secondary cell or secondary node.

For example, in case that the current service data volume or predicted service data volume of the first terminal is higher than a threshold, the first network element may configure a high-frequency hotspot cell as the secondary cell of the first terminal, or configure a high-frequency hotspot node as the secondary node of the first terminal, to avoid all the services of the first terminal being transmitted using a low-frequency wide coverage cell, and avoid congestion caused by exhaustion of radio resources in the low-frequency wide coverage cell.

For example, in case that the current service data volume or predicted service data volume of the first terminal is lower than a threshold, the first network element may remove the secondary cell or secondary node for the first terminal to simplify signaling and data routing, improve reliability, and reduce the interface signaling load within the RAN.

In an embodiment, triggering the procedure for expanding or reducing BWP includes:
expanding or reducing a BWP width for a first terminal or a first multicast service in a first cell based on service data volume or predicted service data volume of the first terminal or the first multicast service in the first cell.

In an embodiment, the first terminal may refer to any terminal, the first multicast service may refer to any multicast service, and the first cell may refer to any cell, which is not limited here.

After obtaining the first service data volume information or generating the first service data volume prediction information, the first network element may determine the service data volume or predicted service data volume of each terminal or each multicast service for one or some cells based on these information, and then determine, based on the determined service data volume or predicted service data volume, whether to trigger the procedure for adjusting the radio resource configuration, such as triggering the procedure for expanding or reducing BWP.

Taking the service data volume or predicted service data volume of the first terminal for the first cell as an example, the first network element determines the service data volume or predicted service data volume of the first terminal for the first cell by first determining on which DRBs the data of the first terminal needs to be transmitted through the first cell based on the obtained first service data volume information or generated first service data volume prediction information, and then accumulating the service data volume or predicted service data volume on these DRBs that the first terminal needs to transmit through the first cell, or accumulating the service data volume or predicted service data volume on the QoS flows mapped to these DRBs, to obtain the service data volume or predicted service data volume of the first terminal for the first cell.

In case that the service data volume or predicted service data volume of the first terminal for the first cell is higher than a threshold value (which may be set as needed and is not limited here), the first network element may expand the BWP of the first terminal on the first cell. On the contrary, in case that the service data volume or predicted service data volume of the first terminal for the first cell is lower than a threshold value (which may be set as needed and is not limited here), the first network element may reduce the BWP of the first terminal on the first cell.

Taking the service data volume or predicted service data volume of the first multicast service for the first cell as an example, the first network element determines the service data volume or predicted service data volume of the first multicast service for the first cell by first determining on which MRBs the data of the first multicast service need to be transmitted through the first cell based on the obtained first service data volume information or generated first service data volume prediction information, and then accumulating the service data volume or predicted service data volume on these MRBs that the first multicast service requirements to transmit through the first cell, or accumulating the service data volume or predicted service data volume on the QoS flows mapped to these MRBs, to obtain the service data volume or predicted service data volume of the first multicast service for the first cell.

In case that the service data volume or predicted service data volume of the first multicast service for the first cell is higher than a threshold (which may be set as needed and is not limited here), the first network element may expand the BWP of the first multicast service on the first cell. On the contrary, in case that the service data volume or predicted service data volume of the first multicast service for the first cell is lower than a threshold (which may be set as needed and is not limited here), the first network element may reduce the BWP of the first multicast service on the first cell.

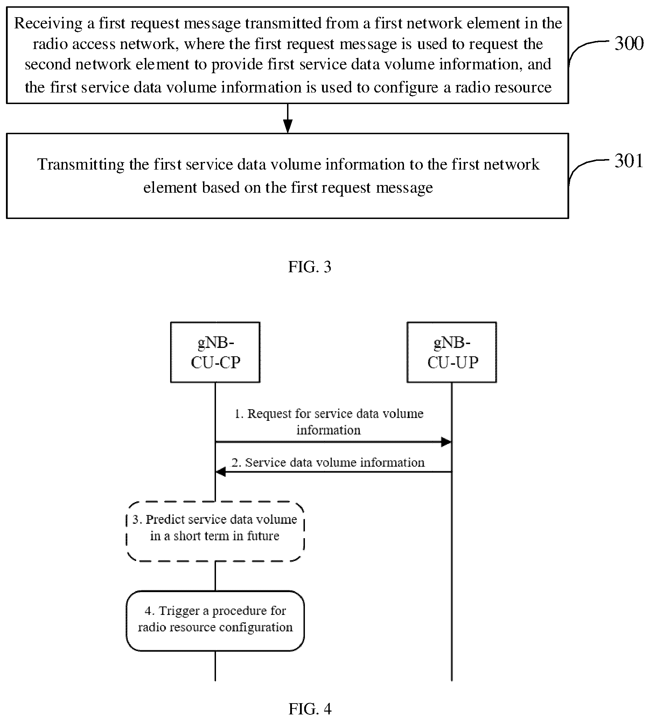

FIG. 3 is a second schematic flowchart of a method for radio resource configuration according to an embodiment of the present application. The method is performed by a second network element in a radio access network. As shown in FIG. 3, the method includes the following steps.

Step 300: receiving a first request message transmitted from a first network element in the radio access network, where the first request message is used to request the second network element to provide first service data volume information, and the first service data volume information is used to configure a radio resource.

Step 301: transmitting the first service data volume information to the first network element based on the first request message.

In an embodiment, in order to solve a problem in the related art that a radio access network node in the user plane and control plane split mechanism, or a master node in dual connectivity scenario, or other network elements in the radio access network cannot dynamically configure radio resource based on service data volume information, which results in a problem that a service requirement cannot be met due to too low configuration or resource waste is caused by too high configuration, in the embodiment of the present application, the first network element in the radio access network (hereinafter referred to as the first network element) may request the second network element in the radio access network (hereinafter referred to as the second network element) to provide the service data volume information.

In an embodiment, the first network element may include a central unit-control plane (i.e., CU-CP) of a radio access network node (e.g., a gNB, ng-eNB, en-gNB, etc.) or a master node (i.e., MN) in dual connectivity.

In an embodiment, the second network element may include a central unit-user plane (i.e., CU-UP) of a radio access network node (e.g., a gNB, ng-eNB, en-gNB, etc.), a distributed unit (i.e., DU) of a radio access network node (e.g., a gNB, ng-eNB, en-gNB, etc.) or a secondary node in dual connectivity.

For example, a gNB-CU-CP may request a gNB-CU-UP to provide the first service data volume information, and the requested content may be to request the gNB-CU-UP to immediately feedback the current service data volume, or to request the gNB-CU-UP to periodically feedback the service data volume, or to feedback the service data volume when certain conditions are met. The first request message may be a separate E1 interface message, or may be included in other E1 interface messages and transmitted together with other information.

For example, a master node may request a secondary node to provide the first service data volume information, and the requested content may be to request the secondary node to immediately feedback the current service data volume, or to request the secondary node to periodically feedback the service data volume, or to feedback the service data volume when certain conditions are met. The first request message may be a separate Xn interface message, or may be included in other Xn interface messages and transmitted together with other information.

For example, a gNB-CU-CP may request a gNB-DU to provide the first service data volume information, and the requested content may be to request the gNB-DU to immediately feedback the current service data volume, or to request the secondary node to periodically feedback the service data volume, or to feedback the service data volume when certain conditions are met. The first request message may be a separate F1 interface message, or may be included in other F1 interface messages and transmitted together with other information.

In an embodiment, the first service data volume information may include one or more of the following.
(1) A sum of sizes of all service data packets transmitted through the second network element for a specified terminal and a specified transmission direction within a specified time interval.

For example, the first request message may indicate which time interval, terminal, transmission direction (such as uplink or downlink direction), and service data packets the second network element is requested to provide service data volume information for.

Taking a gNB-CU-CP requesting a gNB-CU-UP for the first service data volume information as an example, it may be that the gNB-CU-UP is requested to provide the sum of the sizes of all service data packets transmitted through the gNB-CU-UP in a certain transmission direction for a certain terminal within a certain time interval.

Taking a master node requesting a secondary node for the first service data volume information as an example, it may be that the secondary node is requested to provide the sum of the sizes of all service data packets in a certain transmission direction, transmitted through a packet data convergence protocol (PDCP) layer of the secondary node, for a certain terminal within a certain time interval.

(2) A sum of sizes of all service data packets belonging to a specified protocol data unit (PDU) session transmitted through the second network element for a specified terminal and a specified transmission direction within a specified time interval.

Taking a gNB-CU-CP requesting a gNB-CU-UP for the first service data volume information as an example, it may be that the gNB-CU-UP is requested to provide the sum of the sizes of all service data packets in a certain transmission direction, belonging to a certain PDU session and transmitted through the gNB-CU-UP, for a certain terminal within a certain time interval.

Taking a master node requesting a secondary node for the first service data volume information as an example, it may be that the secondary node is requested to provide the sum of the sizes of all service data packets in a certain transmission direction, belonging to a certain PDU session and transmitted through the PDCP layer of the secondary node, for a certain terminal within a certain time interval.

(3) A sum of sizes of all service data packets of a specified data radio bearer (DRB) transmitted through the second network element for a specified terminal and a specified transmission direction within a specified time interval.

Taking a gNB-CU-CP requesting a gNB-CU-UP for the first service data volume information as an example, it may be that the gNB-CU-UP is requested to provide the sum of the sizes of all service data packets of a certain DRB in a certain transmission direction, transmitted through the gNB-CU-UP, for a certain terminal within a certain time interval.

Taking a master node requesting a secondary node for the first service data volume information as an example, it may be that the secondary node is requested to provide the sum of the sizes of all service data packets of a certain DRB in a certain transmission, transmitted through the PDCP layer of the secondary node, for a certain terminal within a certain time interval.

(4) A sum of sizes of all service data packets of a specified unicast quality of service (QoS) flow transmitted through the second network element for a specified terminal and a specified transmission direction within a specified time interval

Taking a gNB-CU-CP requesting a gNB-CU-UP for the first service data volume information as an example, it may be that the gNB-CU-UP is requested to provide the sum of the sizes of all service data packets of a certain unicast QoS flow in a certain transmission direction, transmitted through the gNB-CU-UP, for a certain terminal within a certain time interval.

Taking a master node requesting a secondary node for the first service data volume information as an example, it may be that the secondary node is requested to provide the sum of the sizes of all service data packets of a certain unicast QoS flow in a certain transmission direction, transmitted through the PDCP layer of the secondary node, for a certain terminal within a certain time interval.

(5) A sum of sizes of all service data packets belonging to a specified multicast/broadcast system (MBS) session transmitted through the second network element within a specified time interval.

For example, the first request message may indicate the service data volume information of which time interval and which multicast broadcast service data packets are requested to be provided by the second network element.

Taking a gNB-CU-CP requesting a gNB-CU-UP for the first service data volume information as an example, it may be that gNB-CU-UP is requested to provide the sum of the sizes of all service data packets belonging to a certain MBS session and transmitted through the gNB-CU-UP within a certain time interval.

Taking a master node requesting a secondary node for the first service data volume information as an example, it may be that the secondary node is requested to provide the sum of the sizes of all service data packets belonging to a certain MBS session and transmitted through the PDCP layer of the secondary node within a certain time interval.

(6) A sum of sizes of all service data packets of a specified multicast/broadcast system (MBS) radio bearer (MRB) transmitted through the second network element within a specified time interval.

Taking a gNB-CU-CP requesting a gNB-CU-UP for the first service data volume information as an example, it may be that the gNB-CU-UP is requested to provide the sum of the sizes of all service data packets of a certain MRB transmitted through the gNB-CU-UP within a certain time interval.

Taking a master node requesting a secondary node for the first service data volume information as an example, it may be that the secondary node is requested to provide the sum of the sizes of all service data packets of a certain MRB transmitted through the PDCP layer of the secondary node within a certain time interval.

(7) A sum of sizes of all service data packets of a specified multicast or broadcast quality of service (QoS) flow transmitted through the second network element within a specified time interval.

Taking a gNB-CU-CP requesting a gNB-CU-UP for the first service data volume information as an example, it may be that the gNB-CU-UP is requested to provide the sum of the sizes of all service data packets of a certain multicast or broadcast QoS flow transmitted through the gNB-CU-UP within a certain time interval.

Taking a master node requesting a secondary node for the first service data volume information as an example, it may be that the secondary node is requested to provide the sum of the sizes of all service data packets of a certain multicast or broadcast QoS flow transmitted through the PDCP layer of the secondary node within a certain time interval.

After receiving the first request message, the second network element may transmit the corresponding service data volume information to the first network element based on the content requested by the first request message. After receiving the service data volume information, the first network element may perform subsequent optimization operations associated with radio resource configuration based on the service data volume information, such as triggering radio resource configuration, or transmitting the service data volume information to other network elements for the other network elements to optimize and configure radio resources.

In the method for radio resource configuration provided by the embodiments of the present application, the second network element may provide the first service data volume information to the first network element based on the request of the first network element, and the first network element may perform subsequent optimization operations associated with the radio resource configuration based on the obtained service data volume information, which avoids a problem that the network element for triggering or executing the radio resource configuration in the radio access network cannot obtain the service data volume information, resulting in the inability to meet service requirements or causing waste of resources.

The methods provided by the embodiments of the present application are based on the same conception, and the implementation of the methods may be referred to each other, and the same parts are not repeated.

The following embodiments illustrate the methods provided by the above embodiments of the present application through specific application scenarios. For the convenience of description, embodiments 1 to 7 are described using gNB as an example, but the gNB may also be replaced by other radio access network nodes that may use the user plane and control plane split mechanism, including but not limited to ng-eNB, en-gNB, etc.

Embodiment 1: a gNB-CU-CP requests a gNB-CU-UP to provide service data volume information.

FIG. 4 is a first schematic diagram of an implementation of a method for radio resource configuration according to an embodiment of the present application. As shown in FIG. 4, the method mainly includes the following steps.

Step 1: the gNB-CU-CP requests the gNB-CU-UP to provide the service data volume information. This request may be a separate E1 interface message, or may be included in other E1 interface messages and transmitted together with other information. The requested content may be to request the gNB-CU-UP to immediately feedback the current service data volume, or to request the gNB-CU-UP to periodically feedback the service data volume, or to feedback the service data volume when a certain condition is met. The service data volume here may be:
a sum of sizes of all service data packets in a given transmission direction, transmitted through the gNB-CU-UP, for a certain UE within a given time interval; or
a sum of sizes of all service data packets in a given transmission direction, belonging to a certain PDU session and transmitted through the gNB-CU-UP, for a certain UE within a given time interval; or
a sum of sizes of all service data packets of a certain DRB in a given transmission direction, transmitted through the gNB-CU-UP, for a certain UE within a given time interval; or
a sum of sizes of all service data packets of a certain unicast QoS flow in a given transmission direction, transmitted through the gNB-CU-UP, for a certain UE within a given time interval; or
a sum of sizes of all service data packets belonging to a certain MBS session and transmitted through the gNB-CU-UP within a given time interval; or,
a sum of sizes of all service data packets of a certain MRB transmitted through the gNB-CU-UP within a given time interval; or,
a sum of sizes of all service data packets of a certain multicast or broadcast QoS flow transmitted through the gNB-CU-UP within a given time interval.

The gNB-CU-CP shall indicate which of the above service data volume is requested.

Step 2: the gNB-CU-UP feeds back the service data volume information to the gNB-CU-CP based on the request of the gNB-CU-CP. The fed back service data volume information may be transmitted through a separate E1 interface message, or may be included in other E1 interface messages and transmitted together with other information. In an embodiment, before this step, the gNB-CU-UP feeds back to the gNB-CU-CP that the request in step 1 has been accepted, and then the gNB-CU-CP is ready to receive the service data volume information fed back by the gNB-CU-UP.

Step 3: in an embodiment, the gNB-CU-CP predicts the future short-term-type service data volume based on the service data volume information fed back by the gNB-CU-UP. For example, the gNB-CU-CP predicts how many bytes of service data belonging to a certain QoS flow of the UE need to be transmitted within the next 10 seconds. Furthermore, the gNB-CU-CP may also predict the future service data volume in combination with other information, such as the QoS characteristic of the service, the capability of the UE, the location of the UE, etc.

Step 4: the gNB-CU-CP triggers, based on the service data volume information provided in step 2 or the predicted information for the service data volume provided in step 3, a procedure for radio resource configuration, such as adding or removing DRB or MRB, configuring or removing SCell, configuring or removing secondary node in dual connectivity, expanding or reducing BWP, etc. For example, in case that the UE is expected to have low short-term-type service volume in the future, the gNB-CU-CP triggers a procedure to remove or reduce some radio resource configurations; in case that the UE is expected to have high short-term-type service volume in the future, the gNB-CU-CP triggers a procedure to add or expand some radio resource configurations. During the procedure for radio resource configuration, the gNB-CU-CP notifies the UE of the new configuration through RRC signaling to maintain consistency of configurations between the network and terminal side.

Embodiment 2: a master node requests a secondary node to provide service data volume information.

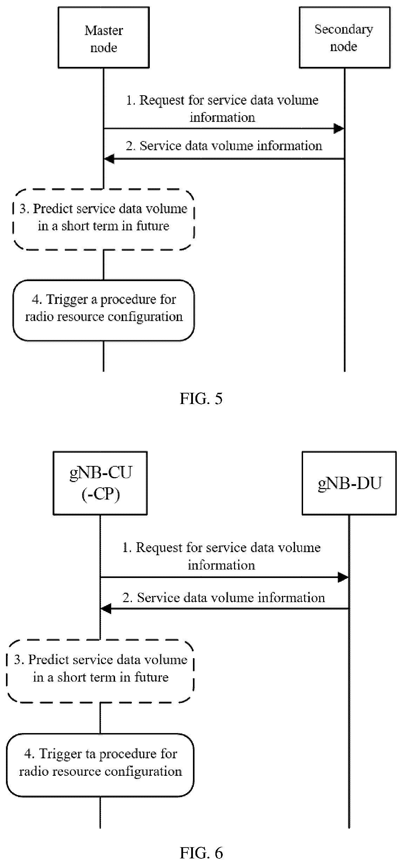

FIG. 5 is a second schematic diagram of an implementation of a method for radio resource configuration according to an embodiment of the present application. As shown in FIG. 5, the method mainly includes the following steps.

Step 1: the master node requests the secondary node to provide the service data volume information. This request may be a separate Xn interface message, or may be included in other Xn interface messages and transmitted together with other information. The requested content may be to request the secondary node to immediately feedback the current service data volume, or to request the secondary node to periodically feedback the service data volume, or to feedback the service data volume when a certain condition is met. The service data volume here may be:
a sum of sizes of all service data packets in a given transmission direction, transmitted through the PDCP layer of the secondary node, for a certain UE within a given time interval; or
a sum of sizes of all service data packets in a given transmission direction, belonging to a certain PDU session and transmitted through the PDCP layer of the secondary node, for a certain UE within a given time interval; or
a sum of sizes of all service data packets of a certain DRB in a given transmission direction, transmitted through the PDCP layer of the secondary node, for a certain UE within a given time interval; or
a sum of sizes of all service data packets of a certain unicast QoS flow in a given transmission direction, transmitted through the PDCP layer of the secondary node, for a certain UE within a given time interval; or
a sum of sizes of all service data packets belonging to a certain MBS session and transmitted through the PDCP layer of the secondary node within a given time interval; or,
a sum of sizes of all service data packets of a certain MRB transmitted through the PDCP layer of the secondary node within a given time interval; or,
a sum of sizes of all service data packets of a certain multicast or broadcast QoS flow transmitted through the PDCP layer of the secondary node within a given time interval.

The master node shall indicate which of the above service data volume is requested.

Step 2: the secondary node feeds back the service data volume information to the master node based on the request of the master node. The fed back service data volume information may be transmitted through a separate Xn interface message, or may be included in other Xn interface messages and transmitted together with other information. In an embodiment, before this step, the secondary node feeds back to the master node that the request in step 1 has been accepted, and then the masted node is ready to receive the service data volume information fed back by the secondary node.

Step 3: in an embodiment, the master node predicts the future short-term-type service data volume based on the service data volume information fed back by the secondary node. For example, the masted node predicts how many bytes of service data belonging to a certain QoS flow of the UE need to be transmitted within the next 10 seconds. Furthermore, the masted node may also predict the future service data volume in combination with other information, such as the QoS characteristic of the service, the capability of the UE, the location of the UE, etc.

Step 4: the master node triggers, based on the service data volume information provided in step 2 or the predicted information for the service data volume provided in step 3, a procedure for radio resource configuration, such as configuring or removing SCell, configuring or removing secondary node in dual connectivity, expanding or reducing BWP, etc. For example, in case that the UE is expected to have low short-term-type service volume in the future, the master node triggers a procedure to remove or reduce some radio resource configurations; in case that the UE is expected to have high short-term-type service volume in the future, the master node triggers a procedure to add or expand some radio resource configurations. During the procedure for radio resource configuration, the master node notifies the UE of the new configuration through RRC signaling to maintain consistency of configurations between the network and terminal side.

Embodiment 3: a gNB-CU(-CP) requests a gNB-DU to provide service data volume information.

FIG. 6 is a third schematic diagram of an implementation of a method for radio resource configuration according to an embodiment of the present application. As shown in FIG. 6, the method mainly includes the following steps.

Step 1: the gNB-CU-CP, as a control plane unit in a gNB-CU, requests, as the gNB-CU, the gNB-DU to provide service data volume information. This request may be a separate F1 interface message, or it may be included in other F1 interface messages and transmitted together with other information. The requested content may be to request the gNB-DU to immediately feedback the current service data volume, or to request the gNB-DU to periodically feedback the service data volume, or to feedback the service data volume when a certain conditions is met. The service data volume here may be:
a sum of sizes of all service data packets in a given transmission direction, transmitted through the gNB-DU, for a certain UE within a given time interval; or
a sum of sizes of all service data packets in a given transmission direction, belonging to a certain DRB and transmitted through the gNB-DU, for a certain UE within a given time interval; or
a sum of sizes of all service data packets belonging to a certain MRB and transmitted through the gNB-DU within a given time interval.

The gNB-CU-CP shall indicate which of the above service data volume is requested.

Step 2: the gNB-DU feeds back the service data volume information to the gNB-CU(-CP) based on the request of the gNB-CU(-CP). The fed back service data volume information may be transmitted through a separate F1 interface message, or may be included in other F1 interface messages and transmitted together with other information. In an embodiment, before this step, the gNB-DU feeds back to the gNB-CU(-CP) that the request in step 1 has been accepted, and then the gNB-CU(-CP) is ready to receive the service data volume information fed back by the gNB-DU.

Step 3: in an embodiment, the gNB-CU-CP predicts the future short-term-type service data volume based on the service data volume information fed back by the gNB-DU. For example, the gNB-CU-CP predicts how many bytes of service data belonging to a certain QoS flow of the UE need to be transmitted within the next 10 seconds. Furthermore, the gNB-CU-CP may also predict the future service data volume in combination with other information, such as the QoS characteristic of the service, the capability of the UE, the location of the UE, etc.

Step 4: the gNB-CU-CP triggers, based on the service data volume information provided in step 2 or the predicted information for the service data volume provided in step 3, a procedure for radio resource configuration, such as adding or removing DRB or MRB, configuring or removing SCell, configuring or removing secondary node in dual connectivity, expanding or reducing BWP, etc. For example, in case that the UE is expected to have low short-term-type service volume in the future, the gNB-CU-CP triggers a procedure to remove or reduce some radio resource configurations; in case that the UE is expected to have high short-term-type service volume in the future, the gNB-CU-CP triggers a procedure to add or expand some radio resource configurations. During the procedure for radio resource configuration, the gNB-CU-CP notifies the UE of the new configuration through RRC signaling to maintain consistency of configurations between the network and terminal side.

Embodiment 4: after obtaining the service data volume information, the gNB-CU-CP pushes the service data volume information or predicted information for service data volume to other nodes.

Step 1: the gNB-CU-CP executes steps 1 to 3 in Embodiment 1, or the gNB-CU-CP of the master node executes steps 1 to 3 in Embodiment 2, or the gNB-CU-CP executes steps 1 to 3 in Embodiment 3.

Step 2: in step 1, the trigger of the gNB-CU-CP is to request or indicate a node 1 in the RAN to establish a context, and then a portion of information is transmitted to the node 1, which includes the service data volume information or the predicted information for the service data volume obtained by the gNB-CU-CP in step 1.

In an embodiment, regarding the context mentioned in step 2:
in case that the service data volume information transmitted to the node 1 is for a certain UE (refer to the corresponding description in step 1 of embodiment 1, 2 or 3 for details), then the context mentioned in step 2 shall be for this UE;
in case that the service data volume information transmitted to the node 1 is for a certain MBS session, or for a certain MRB, or for a certain multicast or broadcast QoS flow, then the context mentioned in step 2 is either for the MBS session, the MRB, the multicast or broadcast QoS flow, or for a UE, and the UE is receiving or is about to receive the MBS session, the MRB, or the multicast or broadcast QoS flow.

In an embodiment, regarding the node 1 in the RAN mentioned in step 2, there are the following possibilities.

The node 1 may be a target node in a handover, or a CU part of a target node in a handover, or a CU-CP part of a target node in a handover. The gNB-CU-CP in step 1 is a source gNB-CU-CP in a handover, and the information transmitted to the node 1 may be a handover request message or a source-to-target transparent transmission container.

The node 1 may be a secondary node in dual connectivity, or a CU part of a secondary node in dual connectivity, or a CU-CP part of a secondary node in dual connectivity. The gNB-CU-CP in step 1 is a master gNB-CU-CP in dual connectivity, and the information transmitted to the node 1 may be a secondary node adding request message or a secondary node modification request message.

The node 1 may be a gNB-CU-UP corresponding to the gNB-CU-CP in step 1. The information transmitted to the node 1 may be a bearer context setup request message, or a broadcast bearer context setup request message, or a multicast bearer context setup request message, or a bearer context modification request message, or a broadcast bearer context modification request message, or a multicast bearer context modification request message.

The node 1 may be a gNB-DU corresponding to the gNB-CU-CP in step 1. The information transmitted to the node 1 is generally a UE context setup request message, or a broadcast context setup request message, or a multicast context setup request message, or a UE context modification request message, a broadcast context modification request message, or a multicast context modification request message.

Step 3: the node 1 performs, based on the service data volume information provided in step 2 or the predicted information for the service data volume, a radio resource configuration operation, such as adding or removing DRB or MRB, configuring or removing SCell, configuring or removing secondary node in dual connectivity, expanding or reducing BWP, etc. For example, in case that the UE is expected to have low short-term-type service volume in the future, the node 1 performs an operation to remove or reduce some radio resource configurations; in case that the UE is expected to have high short-term-type service volume in the future, the node 1 performs an operation to add or expand some radio resource configurations.

Embodiment 5: Specific algorithm for adjusting radio resource configuration based on service data volume information or predicted information for service data volume and the benefits (adding or removing DRB or MRB) thereof.

In case that the current service data volume in a certain transmission direction of QoS flow 1 is lower than a threshold, or it is expected that the service data volume in a certain transmission direction of QoS flow 1 is lower than a threshold in a period of time in the future, the QoS requirement for QoS flow 1 is lower than the QoS requirement for QoS flow 2, and both the two QoS flows do not need to guarantee the transmission rate, then the node that triggers the procedure for radio resource configuration or performs the operation for radio resource configuration shall map the QoS flow 1 and parts of QoS flow 2 in the transmission direction to a same DRB or MRB for transmission, and the DRB or MRB is set based on the QoS requirement for QoS flow 2.

Since the service data volume in the transmission direction of QoS flow 1 is relatively low, or its service data volume in a period time in the future is relatively low, processing the service data packets on QoS flow 1 based on the relatively higher QoS requirements for QoS flow 2 does not increase too much the air interface load, and the establishment of DRB or MRB is reduced. On one hand, this operation may reduce the processing complexity of the network and the terminal. On the other hand, since a terminal may only establish 32 DRBs at most and a cell may only establish 512 MRBs at most, this operation also reduces the occupation of DRB identifiers and MRB identifiers, and the network may have more space to establish more DRBs or MRBs for other services for more refined scheduling, which reduces the air interface load greatly.

On the contrary, in case that the current service data volume in a certain transmission direction of QoS flow 1 is higher than a threshold, or it is expected that the service data volume on QoS flow 1 is higher than a threshold in a period of time in the future, then the node that triggers the procedure for radio resource configuration or performs the operation for radio resource configuration shall separately configure DRB or MRB for the transmission direction of QoS flow 1, rather than merging it into QoS flow 2 with higher QoS requirements, to reduce the air interface load.

The above-mentioned operation for adjusting the radio resource configuration shall be triggered and executed within the gNB; or triggered and executed within the gNB-CU; or triggered by the gNB-CU-CP and executed by the gNB-CU-UP.

Embodiment 6: Specific algorithm for adjusting radio resource configuration based on service data volume information or predicted information for service data volume and the benefits (configuring or removing SCell, configuring or removing secondary node in dual connectivity) thereof.

In case that the current service data volume of a UE is higher than a threshold, or it is expected that the service data volume of the UE is higher than a threshold in a period of time in the future, then the node that triggers the procedure for radio resource configuration or performs the operation for radio resource configuration shall configure a high-frequency hotspot cell as an SCell for the UE, or configure a high-frequency hotspot node as a secondary node for the UE, to avoid the congestion situation that all services of the UE are transmitted using a low-frequency wide coverage cell, causing the radio resources of the low-frequency wide coverage cell to be exhausted.

On the contrary, in case that a UE is currently configured with an SCell or secondary node, but the current service data volume is lower than a threshold, or it is expected that the service data volume of the UE is lower than a threshold in a period of time in the future, then the node that triggers the procedure for radio resource configuration or performs the operation for radio resource configuration shall remove the SCell or secondary node for the UE, to simplify signaling and data routing, improve reliability, and reduce the interface signaling load within the RAN.

The operation for configuring or removing the SCell shall be triggered and executed within the gNB; or triggered within the gNB-CU and executed by the gNB-DU; or triggered by the gNB-CU-CP and executed by the gNB-DU.

The operation for configuring or removing the secondary node in the dual connectivity shall be triggered within the gNB and executed by another node in the RAN; or triggered within the gNB-CU and executed by another node in the RAN; or triggered by the gNB-CU-CP and executed by another node in the RAN.

Embodiment 7: Specific algorithm for adjusting radio resource configuration based on service data volume information or predicted information for service data volume and the benefits (expanding or reducing BWP) thereof.

A width of a BWP configured in a cell shall be determined based on the current service data volume or expected service data volume in the cell.

In case that the BWP is for a UE, the node that triggers the procedure for radio resource configuration shall first determine on which DRBs the data of the UE needs to be transmitted through the cell, and obtain the (expected) service data volume of the UE for the cell by accumulating the (expected) service data volume on these DRBs or the (expected) service data volume on the QoS flows mapped to these DRBs, and then determine the BWP width for the UE in the cell accordingly.

Similarly, in case that the BWP is for a multicast service, the node that triggers the procedure for radio resource configuration shall first determine on which MRBs the data of the multicast service need to be transmit through the cell, and obtain the (expected) service data volume of the multicast service for the cell by accumulating the (expected) service data volume on these MRBs or the (expected) service data volume mapped to the QoS flows of these MRBs, and then determine the BWP width for the multicast service on the cell accordingly.

In the gNB-CU/DU split scenario, the above accumulation operation may be performed within the gNB-CU(-CP) or within the gNB-DU.

In case that the above accumulation operation is performed within the gNB-CU(-CP), the gNB-CU(-CP) first obtains the (expected) service data volume for the DRB, or MRB, or QoS flow, and then sums them up and transmits them to the gNB-DU as the (expected) service data volume for the cell. The way that the gNB-CU(-CP) obtains the service data volume information or the predicted information for the service data volume may be directly in accordance with the way described in steps 1 to 3 of embodiment 1, embodiment 2 or embodiment 3, or may be pushed by another gNB-CU(-CP) in the way of embodiment 4. After obtaining the (expected) service data volume for the cell, the gNB-DU directly uses it to configure the BWP in an optimized way.

In case that it is executed within the gNB-DU, the gNB-CU(-CP) directly forwards the (expected) service data volume for the DRB, or MRB, or QoS flow it obtained to the gNB-DU, and the gNB-DU performs a summation operation and uses it to configure the BWP in an optimized way.

Through this method, in case that the UE has low data volume in a period of time in the future, the network may indicate the UE to use a narrower BWP from the beginning, which reduces the power consumption of the UE.

The methods and apparatuses provided in the various embodiments of the present application are based on the same conception. Since the principles of solving the problems in the methods and apparatuses are similar, the implementation of the apparatuses and methods may refer to each other, and the same parts are not be repeated.

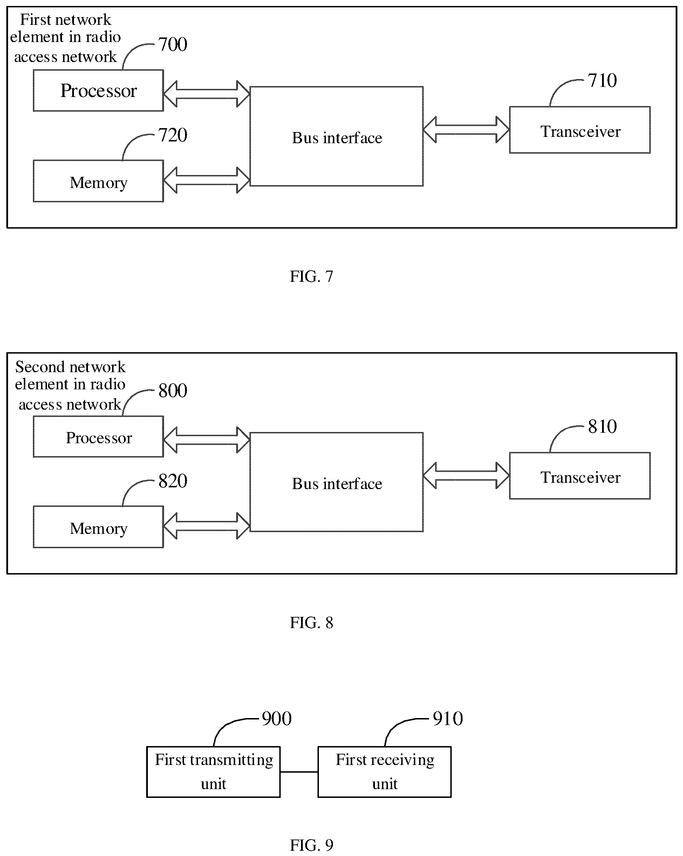

FIG. 7 is a schematic structural diagram of a first network element in a radio access network according to an embodiment of the present application. As shown in FIG. 7, the first network element in the radio access network includes a memory 720, a transceiver 710 and a processor 700, where the processor 700 and memory 720 may be physically arranged separately.

The memory 720 is used for storing a computer program, and the transceiver 710 is used for receiving and transmitting data under control of the processor 700.

In an embodiment, the transceiver 710 is used for receiving and transmitting data under control of the processor 700.

In FIG. 7, a bus architecture may include any number of interconnected buses and bridges, which are linked together through various circuits of one or more processors represented by the processor 700 and one or more memories represented by the memory 720. The bus architecture may also link together various other circuits, such as peripherals, voltage regulators, and power management circuits, etc., which are well known in the art, and therefore are not further described in the present application. The bus interface provides an interface. The transceiver 710 may include multiple elements, i.e., including a transmitter and a receiver, units for providing communication with various other devices over transmission media including wireless channels, wired channels, fiber optic cables, and the like.

The processor 700 is responsible for managing the bus architecture and general processing, and the memory 720 may store data used by the processor 700 when performing operations.

The processor 700 may be a central processing unit (CPU), an application specific integrated circuit (ASIC), a field-programmable gate array (FPGA), or a complex programmable logic device (CPLD), the processor may also use a multi-core architecture.

The processor 700 calls the computer program stored in the memory 720 to execute any of the methods provided by the embodiments of the present application in accordance with the obtained executable instructions. The method includes: transmitting a first request message to a second network element in the radio access network, where the first request message is used to request the second network element to provide first service data volume information, and the first service data volume information is used to configure a radio resource; and receiving the first service data volume information transmitted from the second network element.

In an embodiment, after receiving the first service data volume information transmitted from the second network element, the method further includes:
triggering a procedure for radio resource configuration based on the first service data volume information or first service data volume prediction information, where
the first service data volume prediction information is generated based on the first service data volume information.

In an embodiment, after receiving the first service data volume information transmitted from the second network element, the method further includes:
transmitting a second request message to a third network element in the radio access network, where the second request message is used to request the third network element to configure a radio resource, the second request message includes the first service data volume information or first service data volume prediction information, where
the first service data volume prediction information is generated based on the first service data volume information.

In an embodiment, the first service data volume information includes one or more of the following:
a sum of sizes of all service data packets transmitted through the second network element for a specified terminal and a specified transmission direction within a specified time interval;
a sum of sizes of all service data packets belonging to a specified protocol data unit (PDU) session transmitted through the second network element for a specified terminal and a specified transmission direction within a specified time interval;
a sum of sizes of all service data packets of a specified data radio bearer (DRB) transmitted through the second network element for a specified terminal and a specified transmission direction within a specified time interval;
a sum of sizes of all service data packets of a specified unicast quality of service (QoS) flow transmitted through the second network element for a specified terminal and a specified transmission direction within a specified time interval;
a sum of sizes of all service data packets belonging to a specified multicast/broadcast system (MBS) session transmitted through the second network element within a specified time interval;
a sum of sizes of all service data packets of a specified multicast/broadcast system (MBS) radio bearer (MRB) transmitted through the second network element within a specified time interval; or
a sum of sizes of all service data packets of a specified multicast or broadcast quality of service (QoS) flow transmitted through the second network element within a specified time interval.

In an embodiment, triggering the procedure for radio resource configuration includes one or more of the following:
triggering a procedure for adding or removing data radio bearer (DRB) or multicast/broadcast system radio bearer (MRB);
triggering a procedure for configuring or removing secondary cell or secondary node; or
triggering a procedure for expanding or reducing bandwidth part (BWP).

In an embodiment, triggering the procedure for adding or removing DRB or MRB includes:
in case that service data volume or predicted service data volume in a first transmission direction of a first quality of service (QoS) flow is higher than a first threshold, mapping the first QoS flow in the first transmission direction to a separately configured DRB or MRB for transmission; or,
in case that service data volume or predicted service data volume in a first transmission direction of a first quality of service (QoS) flow is lower than a second threshold, mapping the first QoS flow in the first transmission direction and a second QoS flow in the first transmission direction to a same DRB or MRB for transmission, where a QoS requirement for the second QoS flow is higher than a QoS requirement for the first QoS flow.

In an embodiment, triggering the procedure for configuring or removing secondary cell or secondary node includes:
in case that service data volume or predicted service data volume of a first terminal is higher than a third threshold, configuring a high-frequency hotspot cell as a secondary cell for the first terminal, or configuring a high-frequency hotspot node as a secondary node for the first terminal; or,
in case that service data volume or predicted service data volume of a first terminal is lower than a fourth threshold, removing a secondary cell or a secondary node for the first terminal.

In an embodiment, triggering the procedure for expanding or reducing BWP includes:
expanding or reducing a BWP width for a first terminal or a first multicast service in a first cell based on service data volume or predicted service data volume of the first terminal or the first multicast service in the first cell.

In an embodiment, the first network element includes a central unit-control plane of a radio access network node or a master node in dual connectivity.

FIG. 8 is a schematic structural diagram of a second network element in a radio access network according to an embodiment of the present application. As shown in FIG. 8, the second network element in the radio access network includes a memory 820, a transceiver 810 and a processor 800, where the processor 800 and memory 820 may be physically arranged separately.

The memory 820 is used for storing a computer program, and the transceiver 810 is used for receiving and transmitting data under control of the processor 800.

In an embodiment, the transceiver 810 is used for receiving and transmitting data under control of the processor 800.

In FIG. 8, a bus architecture may include any number of interconnected buses and bridges, which are linked together through various circuits of one or more processors represented by the processor 800 and one or more memories represented by the memory 820. The bus architecture may also link together various other circuits, such as peripherals, voltage regulators, and power management circuits, etc., which are well known in the art, and therefore are not further described in the present application. The bus interface provides an interface. The transceiver 810 may include multiple elements, i.e., including a transmitter and a receiver, units for providing communication with various other devices over transmission media including wireless channels, wired channels, fiber optic cables, and the like.

The processor 800 is responsible for managing the bus architecture and general processing, and the memory 820 may store data used by the processor 800 when performing operations.

The processor 800 may be a CPU, an ASIC, an FPGA, or a CPLD, the processor may also use a multi-core architecture.

The processor 800 calls the computer program stored in the memory 820 to execute any of the methods provided by the embodiments of the present application in accordance with the obtained executable instructions. The method includes: receiving a first request message transmitted from a first network element in the radio access network, where the first request message is used to request the second network element to provide first service data volume information, and the first service data volume information is used to configure a radio resource; and transmitting the first service data volume information to the first network element based on the first request message.

In an embodiment, the first service data volume information includes one or more of the following:
a sum of sizes of all service data packets transmitted through the second network element for a specified terminal and a specified transmission direction within a specified time interval;
a sum of sizes of all service data packets belonging to a specified protocol data unit (PDU) session transmitted through the second network element for a specified terminal and a specified transmission direction within a specified time interval;
a sum of sizes of all service data packets of a specified data radio bearer (DRB) transmitted through the second network element for a specified terminal and a specified transmission direction within a specified time interval;
a sum of sizes of all service data packets of a specified unicast quality of service (QoS) flow transmitted through the second network element for a specified terminal and a specified transmission direction within a specified time interval;
a sum of sizes of all service data packets belonging to a specified multicast/broadcast system (MBS) session transmitted through the second network element within a specified time interval;
a sum of sizes of all service data packets of a specified multicast/broadcast system (MBS) radio bearer (MRB) transmitted through the second network element within a specified time interval; or
a sum of sizes of all service data packets of a specified multicast or broadcast quality of service (QoS) flow transmitted through the second network element within a specified time interval.

In an embodiment, the second network element includes a central unit-user plane of a radio access network node, a distributed unit of a radio access network node, or a secondary node in dual connectivity.

It should be noted here that the above first network element and second network element provided by the embodiments of the present application may implement all the method steps implemented by the above method embodiments, and may achieve the same effect. The same parts and beneficial effects as the same method embodiments are not repeated in the present application.

FIG. 9 is a first schematic structural diagram of an apparatus for radio resource configuration according to an embodiment of the present application. The apparatus may be used in a first network element in a radio access network. As shown in FIG. 9, the apparatus includes:
a first transmitting unit 900, used for transmitting a first request message to a second network element in a radio access network, where the first request message is used to request the second network element to provide first service data volume information, and the first service data volume information is used to configure a radio resource; and
a first receiving unit 910, used for receiving the first service data volume information transmitted from the second network element.

In an embodiment, the apparatus further includes a configuring unit, used for:
triggering a procedure for radio resource configuration based on the first service data volume information or first service data volume prediction information, where
the first service data volume prediction information is generated based on the first service data volume information.

In an embodiment, the first transmitting unit 900 is further used for:
transmitting a second request message to a third network element in the radio access network, where the second request message is used to request the third network element to configure a radio resource, the second request message includes the first service data volume information or first service data volume prediction information, where
the first service data volume prediction information is generated based on the first service data volume information.

In an embodiment, the first service data volume information includes one or more of the following:
a sum of sizes of all service data packets transmitted through the second network element for a specified terminal and a specified transmission direction within a specified time interval;
a sum of sizes of all service data packets belonging to a specified protocol data unit (PDU) session transmitted through the second network element for a specified terminal and a specified transmission direction within a specified time interval;
a sum of sizes of all service data packets of a specified data radio bearer (DRB) transmitted through the second network element for a specified terminal and a specified transmission direction within a specified time interval;
a sum of sizes of all service data packets of a specified unicast quality of service (QoS) flow transmitted through the second network element for a specified terminal and a specified transmission direction within a specified time interval;
a sum of sizes of all service data packets belonging to a specified multicast/broadcast system (MBS) session transmitted through the second network element within a specified time interval;
a sum of sizes of all service data packets of a specified multicast/broadcast system (MBS) radio bearer (MRB) transmitted through the second network element within a specified time interval; or
a sum of sizes of all service data packets of a specified multicast or broadcast quality of service (QoS) flow transmitted through the second network element within a specified time interval.

In an embodiment, triggering the procedure for radio resource configuration includes one or more of the following:
triggering a procedure for adding or removing data radio bearer (DRB) or multicast/broadcast system radio bearer (MRB);
triggering a procedure for configuring or removing secondary cell or secondary node; or
triggering a procedure for expanding or reducing bandwidth part (BWP).

In an embodiment, triggering the procedure for adding or removing DRB or MRB includes:
in case that service data volume or predicted service data volume in a first transmission direction of a first quality of service (QoS) flow is higher than a first threshold, mapping the first QoS flow in the first transmission direction to a separately configured DRB or MRB for transmission; or,
in case that service data volume or predicted service data volume in a first transmission direction of a first quality of service (QoS) flow is lower than a second threshold, mapping the first QoS flow in the first transmission direction and a second QoS flow in the first transmission direction to a same DRB or MRB for transmission, where a QoS requirement for the second QoS flow is higher than a QoS requirement for the first QoS flow.

In an embodiment, triggering the procedure for configuring or removing secondary cell or secondary node includes:
in case that service data volume or predicted service data volume of a first terminal is higher than a third threshold, configuring a high-frequency hotspot cell as a secondary cell for the first terminal, or configuring a high-frequency hotspot node as a secondary node for the first terminal; or,
in case that service data volume or predicted service data volume of a first terminal is lower than a fourth threshold, removing a secondary cell or a secondary node for the first terminal.

In an embodiment, triggering the procedure for expanding or reducing BWP includes:
expanding or reducing a BWP width for a first terminal or a first multicast service in a first cell based on service data volume or predicted service data volume of the first terminal or the first multicast service in the first cell.

In an embodiment, the first network element includes a central unit-control plane of a radio access network node or a master node in dual connectivity.

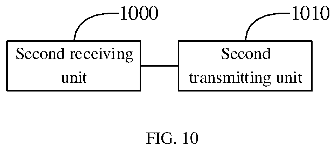

FIG. 10 is a second schematic structural diagram of an apparatus for radio resource configuration according to an embodiment of the present application. The apparatus may be used in a second network element in a radio access network. As shown in FIG. 10, the apparatus includes:
a second receiving unit 1000, used for receiving a first request message transmitted from a first network element in a radio access network, where the first request message is used to request the second network element to provide first service data volume information, and the first service data volume information is used to configure a radio resource; and
a second transmitting unit 1010, used for transmitting the first service data volume information to the first network element based on the first request message.

In an embodiment, the first service data volume information includes one or more of the following:
a sum of sizes of all service data packets transmitted through the second network element for a specified terminal and a specified transmission direction within a specified time interval;
a sum of sizes of all service data packets belonging to a specified protocol data unit (PDU) session transmitted through the second network element for a specified terminal and a specified transmission direction within a specified time interval;
a sum of sizes of all service data packets of a specified data radio bearer (DRB) transmitted through the second network element for a specified terminal and a specified transmission direction within a specified time interval;
a sum of sizes of all service data packets of a specified unicast quality of service (QoS) flow transmitted through the second network element for a specified terminal and a specified transmission direction within a specified time interval;
a sum of sizes of all service data packets belonging to a specified multicast/broadcast system (MBS) session transmitted through the second network element within a specified time interval;
a sum of sizes of all service data packets of a specified multicast/broadcast system (MBS) radio bearer (MRB) transmitted through the second network element within a specified time interval; or
a sum of sizes of all service data packets of a specified multicast or broadcast quality of service (QoS) flow transmitted through the second network element within a specified time interval.

In an embodiment, the second network element includes a central unit-user plane of a radio access network node, a distributed unit of a radio access network node, or a secondary node in dual connectivity.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk, etc.

It should be noted here that the above apparatus according to the embodiments of the present application may implement all the method steps implemented by the above method embodiments, and may achieve the same effect. The same parts and beneficial effects as the same method embodiments are not repeated here.

An embodiment of the present application further provides a computer readable storage medium storing a computer program that cause a computer to perform the steps of any of the method for radio resource configuration provided by the above embodiments.

It should be noted here that the computer readable storage medium according to the embodiments of the present application may implement all the method steps implemented by the above method embodiments, and may achieve the same effect. The same parts and beneficial effects as the same method embodiments are not repeated here.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The radio access network node in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The radio access network node may be used for exchanging received air frames with internet protocol (IP) packets, and acting as a router between the wireless terminal device and the rest of the access network, where the rest of the access network may include an IP communication network. The radio access network node may also coordinate attribute management for the air interface. For example, the radio access network node in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the radio access network node may include a centralized unit (CU) node and a distributed unit (DU) node, and the centralized unit and the distributed unit may be geographically separated.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for radio resource configuration, performed by a first network element in a radio access network, comprising:
transmitting a first request message to a second network element in the radio access network, wherein the first request message is used to request the second network element to provide first service data volume information, and the first service data volume information is used to configure a radio resource; and
receiving the first service data volume information transmitted from the second network element.

2. The method of claim 1, wherein after receiving the first service data volume information transmitted from the second network element, the method further comprises:
triggering a procedure for radio resource configuration based on the first service data volume information or first service data volume prediction information,
wherein the first service data volume prediction information is generated based on the first service data volume information.

3. The method of claim 1, wherein after receiving the first service data volume information transmitted from the second network element, the method further comprises:
transmitting a second request message to a third network element in the radio access network, wherein the second request message is used to request the third network element to configure a radio resource, the second request message comprises the first service data volume information or first service data volume prediction information,
wherein the first service data volume prediction information is generated based on the first service data volume information.

4. The method of any of claims 1 to 3, wherein the first service data volume information comprises one or more of the following:
a sum of sizes of all service data packets transmitted through the second network element for a specified terminal and a specified transmission direction within a specified time interval;
a sum of sizes of all service data packets belonging to a specified protocol data unit (PDU) session transmitted through the second network element for a specified terminal and a specified transmission direction within a specified time interval;
a sum of sizes of all service data packets of a specified data radio bearer (DRB) transmitted through the second network element for a specified terminal and a specified transmission direction within a specified time interval;
a sum of sizes of all service data packets of a specified unicast quality of service (QoS) flow transmitted through the second network element for a specified terminal and a specified transmission direction within a specified time interval;
a sum of sizes of all service data packets belonging to a specified multicast/broadcast system (MBS) session transmitted through the second network element within a specified time interval;
a sum of sizes of all service data packets of a specified multicast/broadcast system (MBS) radio bearer (MRB) transmitted through the second network element within a specified time interval; or
a sum of sizes of all service data packets of a specified multicast or broadcast quality of service (QoS) flow transmitted through the second network element within a specified time interval.

5. The method of claim 2, wherein triggering the procedure for radio resource configuration comprises one or more of the following:
triggering a procedure for adding or removing data radio bearer (DRB) or multicast/broadcast system radio bearer (MRB);
triggering a procedure for configuring or removing a secondary cell or a secondary node; or
triggering a procedure for expanding or reducing bandwidth part (BWP).

6. The method of claim 5, wherein triggering the procedure for adding or removing DRB or MRB comprises:
in case that service data volume or predicted service data volume in a first transmission direction of a first quality of service (QoS) flow is higher than a first threshold, mapping the first QoS flow in the first transmission direction to a separately configured DRB or MRB for transmission; or,
in case that service data volume or predicted service data volume in a first transmission direction of a first quality of service (QoS) flow is lower than a second threshold, mapping the first QoS flow in the first transmission direction and a second QoS flow in the first transmission direction to a same DRB or MRB for transmission, wherein a QoS requirement for the second QoS flow is higher than a QoS requirement for the first QoS flow.

7. The method of claim 5, wherein triggering the procedure for configuring or removing secondary cell or secondary node comprises:
in case that service data volume or predicted service data volume of a first terminal is higher than a third threshold, configuring a high-frequency hotspot cell as a secondary cell for the first terminal, or configuring a high-frequency hotspot node as a secondary node for the first terminal; or,
in case that service data volume or predicted service data volume of a first terminal is lower than a fourth threshold, removing a secondary cell or a secondary node for the first terminal.

8. The method of claim 5, wherein triggering the procedure for expanding or reducing BWP comprises:
expanding or reducing a BWP width for a first terminal or a first multicast service in a first cell based on service data volume or predicted service data volume of the first terminal or the first multicast service in the first cell.

9. The method of claim 1, wherein the first network element comprises a central unit-control plane of a radio access network node or a master node in dual connectivity.

10. A method for radio resource configuration, performed by a second network element in a radio access network, comprising:
receiving a first request message transmitted from a first network element in the radio access network, wherein the first request message is used to request the second network element to provide first service data volume information, and the first service data volume information is used to configure a radio resource; and
transmitting the first service data volume information to the first network element based on the first request message.

11. The method of claim 10, wherein the first service data volume information comprises one or more of the following:
a sum of sizes of all service data packets transmitted through the second network element for a specified terminal and a specified transmission direction within a specified time interval;
a sum of sizes of all service data packets belonging to a specified protocol data unit (PDU) session transmitted through the second network element for a specified terminal and a specified transmission direction within a specified time interval;
a sum of sizes of all service data packets of a specified data radio bearer (DRB) transmitted through the second network element for a specified terminal and a specified transmission direction within a specified time interval;
a sum of sizes of all service data packets of a specified unicast quality of service (QoS) flow transmitted through the second network element for a specified terminal and a specified transmission direction within a specified time interval;
a sum of sizes of all service data packets belonging to a specified multicast/broadcast system (MBS) session transmitted through the second network element within a specified time interval;
a sum of sizes of all service data packets of a specified multicast/broadcast system (MBS) radio bearer (MRB) transmitted through the second network element within a specified time interval; or
a sum of sizes of all service data packets of a specified multicast or broadcast quality of service (QoS) flow transmitted through the second network element within a specified time interval.

12. The method of claim 10, wherein the second network element comprises a central unit-user plane of a radio access network node, a distributed unit of a radio access network node, or a secondary node in dual connectivity.

13. A first network element in a radio access network, comprising a memory, a transceiver and a processor,
wherein the memory is used for storing a computer program, the transceiver is used for transmitting and receiving data under control of the processor, and the processor is used for reading the computer program in the memory and performing the following operations:
transmitting a first request message to a second network element in the radio access network, wherein the first request message is used to request the second network element to provide first service data volume information, and the first service data volume information is used to configure a radio resource; and
receiving the first service data volume information transmitted from the second network element.

14. The first network element of claim 13, wherein after receiving the first service data volume information transmitted from the second network element, the operations further comprise:
triggering a procedure for radio resource configuration based on the first service data volume information or first service data volume prediction information, wherein
the first service data volume prediction information is generated based on the first service data volume information.

15. The first network element of claim 13, wherein after receiving the first service data volume information transmitted from the second network element, the operations further comprise:
transmitting a second request message to a third network element in the radio access network, wherein the second request message is used to request the third network element to configure a radio resource, the second request message comprises the first service data volume information or first service data volume prediction information, wherein
the first service data volume prediction information is generated based on the first service data volume information.

16. The first network element of any of claims 13 to 15, wherein the first service data volume information comprises one or more of the following:
a sum of sizes of all service data packets transmitted through the second network element for a specified terminal and a specified transmission direction within a specified time interval;
a sum of sizes of all service data packets belonging to a specified protocol data unit (PDU) session transmitted through the second network element for a specified terminal and a specified transmission direction within a specified time interval;
a sum of sizes of all service data packets of a specified data radio bearer (DRB) transmitted through the second network element for a specified terminal and a specified transmission direction within a specified time interval;
a sum of sizes of all service data packets of a specified unicast quality of service (QoS) flow transmitted through the second network element for a specified terminal and a specified transmission direction within a specified time interval;
a sum of sizes of all service data packets belonging to a specified multicast/broadcast system (MBS) session transmitted through the second network element within a specified time interval;
a sum of sizes of all service data packets of a specified multicast/broadcast system (MBS) radio bearer (MRB) transmitted through the second network element within a specified time interval; or
a sum of sizes of all service data packets of a specified multicast or broadcast quality of service (QoS) flow transmitted through the second network element within a specified time interval.

17. The first network element of claim 14, wherein triggering the procedure for radio resource configuration comprises one or more of the following:
triggering a procedure for adding or removing data radio bearer (DRB) or multicast/broadcast system radio bearer (MRB);
triggering a procedure for configuring or removing secondary cell or secondary node; or
triggering a procedure for expanding or reducing bandwidth part (BWP).

18. The first network element of claim 17, wherein triggering the procedure for adding or removing DRB or MRB comprises:
in case that service data volume or predicted service data volume in a first transmission direction of a first quality of service (QoS) flow is higher than a first threshold, mapping the first QoS flow in the first transmission direction to a separately configured DRB or MRB for transmission; or,
in case that service data volume or predicted service data volume in a first transmission direction of a first quality of service (QoS) flow is lower than a second threshold, mapping the first QoS flow in the first transmission direction and a second QoS flow in the first transmission direction to a same DRB or MRB for transmission, wherein a QoS requirement for the second QoS flow is higher than a QoS requirement for the first QoS flow.

19. The first network element of claim 17, wherein triggering the procedure for configuring or removing secondary cell or secondary node comprises:
in case that service data volume or predicted service data volume of a first terminal is higher than a third threshold, configuring a high-frequency hotspot cell as a secondary cell for the first terminal, or configuring a high-frequency hotspot node as a secondary node for the first terminal; or,
in case that service data volume or predicted service data volume of a first terminal is lower than a fourth threshold, removing a secondary cell or a secondary node for the first terminal.

20. The first network element of claim 17, wherein triggering the procedure for expanding or reducing BWP comprises:
expanding or reducing a BWP width for a first terminal or a first multicast service in a first cell based on service data volume or predicted service data volume of the first terminal or the first multicast service in the first cell.

21. The first network element of claim 13, wherein the first network element comprises a central unit-control plane of a radio access network node or a master node in dual connectivity.

22. A second network element in a radio access network, comprising a memory, a transceiver and a processor,
wherein the memory is used for storing a computer program, the transceiver is used for transmitting and receiving data under control of the processor, and the processor is used for reading the computer program in the memory and performing the following operations:
receiving a first request message transmitted from a first network element in the radio access network, wherein the first request message is used to request the second network element to provide first service data volume information, and the first service data volume information is used to configure a radio resource; and
transmitting the first service data volume information to the first network element based on the first request message.

23. The second network element of claim 22, wherein the first service data volume information comprises one or more of the following:
a sum of sizes of all service data packets transmitted through the second network element for a specified terminal and a specified transmission direction within a specified time interval;
a sum of sizes of all service data packets belonging to a specified protocol data unit (PDU) session transmitted through the second network element for a specified terminal and a specified transmission direction within a specified time interval;
a sum of sizes of all service data packets of a specified data radio bearer (DRB) transmitted through the second network element for a specified terminal and a specified transmission direction within a specified time interval;
a sum of sizes of all service data packets of a specified unicast quality of service (QoS) flow transmitted through the second network element for a specified terminal and a specified transmission direction within a specified time interval;
a sum of sizes of all service data packets belonging to a specified multicast/broadcast system (MBS) session transmitted through the second network element within a specified time interval;
a sum of sizes of all service data packets of a specified multicast/broadcast system (MBS) radio bearer (MRB) transmitted through the second network element within a specified time interval; or
a sum of sizes of all service data packets of a specified multicast or broadcast quality of service (QoS) flow transmitted through the second network element within a specified time interval.

24. The second network element of claim 22, wherein the second network element comprises a central unit-user plane of a radio access network node, a distributed unit of a radio access network node, or a secondary node in dual connectivity.

25. An apparatus for radio resource configuration, comprising:
a first transmitting unit, used for transmitting a first request message to a second network element in a radio access network, wherein the first request message is used to request the second network element to provide first service data volume information, and the first service data volume information is used to configure a radio resource; and
a first receiving unit, used for receiving the first service data volume information transmitted from the second network element.

26. The apparatus of claim 25, wherein the apparatus further comprises a configuring unit, used for:
triggering a procedure for radio resource configuration based on the first service data volume information or first service data volume prediction information, wherein
the first service data volume prediction information is generated based on the first service data volume information.

27. The apparatus of claim 25, wherein the first transmitting unit is further used for:
transmitting a second request message to a third network element in the radio access network, wherein the second request message is used to request the third network element to configure a radio resource, the second request message comprises the first service data volume information or first service data volume prediction information, wherein
the first service data volume prediction information is generated based on the first service data volume information.

28. The apparatus of any of claims 25 to 27, wherein the first service data volume information comprises one or more of the following:
a sum of sizes of all service data packets transmitted through the second network element for a specified terminal and a specified transmission direction within a specified time interval;
a sum of sizes of all service data packets belonging to a specified protocol data unit (PDU) session transmitted through the second network element for a specified terminal and a specified transmission direction within a specified time interval;
a sum of sizes of all service data packets of a specified data radio bearer (DRB) transmitted through the second network element for a specified terminal and a specified transmission direction within a specified time interval;
a sum of sizes of all service data packets of a specified unicast quality of service (QoS) flow transmitted through the second network element for a specified terminal and a specified transmission direction within a specified time interval;
a sum of sizes of all service data packets belonging to a specified multicast/broadcast system (MBS) session transmitted through the second network element within a specified time interval;
a sum of sizes of all service data packets of a specified multicast/broadcast system (MBS) radio bearer (MRB) transmitted through the second network element within a specified time interval; or
a sum of sizes of all service data packets of a specified multicast or broadcast quality of service (QoS) flow transmitted through the second network element within a specified time interval.

29. The apparatus of claim 26, wherein triggering the procedure for radio resource configuration comprises one or more of the following:
triggering a procedure for adding or removing data radio bearer (DRB) or multicast/broadcast system radio bearer (MRB);
triggering a procedure for configuring or removing secondary cell or secondary node; or
triggering a procedure for expanding or reducing bandwidth part (BWP).

30. The apparatus of claim 29, wherein triggering the procedure for adding or removing DRB or MRB comprises:
in case that service data volume or predicted service data volume in a first transmission direction of a first quality of service (QoS) flow is higher than a first threshold, mapping the first QoS flow in the first transmission direction to a separately configured DRB or MRB for transmission; or,
in case that service data volume or predicted service data volume in a first transmission direction of a first quality of service (QoS) flow is lower than a second threshold, mapping the first QoS flow in the first transmission direction and a second QoS flow in the first transmission direction to a same DRB or MRB for transmission, wherein a QoS requirement for the second QoS flow is higher than a QoS requirement for the first QoS flow.

31. The apparatus of claim 29, wherein triggering the procedure for configuring or removing secondary cell or secondary node comprises:
in case that service data volume or predicted service data volume of a first terminal is higher than a third threshold, configuring a high-frequency hotspot cell as a secondary cell for the first terminal, or configuring a high-frequency hotspot node as a secondary node for the first terminal; or,
in case that service data volume or predicted service data volume of a first terminal is lower than a fourth threshold, removing a secondary cell or a secondary node for the first terminal.

32. The apparatus of claim 29, wherein triggering the procedure for expanding or reducing BWP comprises:
expanding or reducing a BWP width for a first terminal or a first multicast service in a first cell based on service data volume or predicted service data volume of the first terminal or the first multicast service in the first cell.

33. An apparatus for radio resource configuration, comprising:
a second receiving unit, used for receiving a first request message transmitted from a first network element in a radio access network, wherein the first request message is used to request the second network element to provide first service data volume information, and the first service data volume information is used to configure a radio resource; and
a second transmitting unit, used for transmitting the first service data volume information to the first network element based on the first request message.

34. The apparatus of claim 33, wherein the first service data volume information comprises one or more of the following:
a sum of sizes of all service data packets transmitted through the second network element for a specified terminal and a specified transmission direction within a specified time interval;
a sum of sizes of all service data packets belonging to a specified protocol data unit (PDU) session transmitted through the second network element for a specified terminal and a specified transmission direction within a specified time interval;
a sum of sizes of all service data packets of a specified data radio bearer (DRB) transmitted through the second network element for a specified terminal and a specified transmission direction within a specified time interval;
a sum of sizes of all service data packets of a specified unicast quality of service (QoS) flow transmitted through the second network element for a specified terminal and a specified transmission direction within a specified time interval;
a sum of sizes of all service data packets belonging to a specified multicast/broadcast system (MBS) session transmitted through the second network element within a specified time interval;
a sum of sizes of all service data packets of a specified multicast/broadcast system (MBS) radio bearer (MRB) transmitted through the second network element within a specified time interval; or
a sum of sizes of all service data packets of a specified multicast or broadcast quality of service (QoS) flow transmitted through the second network element within a specified time interval.

35. The apparatus of claim 33, wherein the second network element comprises a central unit-user plane of a radio access network node, a distributed unit of a radio access network node, or a secondary node in dual connectivity.

36. A computer readable storage medium storing a computer program that causes a computer to perform the method of any of claims 1 to 9, or perform the method of any of claims 10 to 12.
